# EUROPEAN PATENT SPECIFICATION

(11) **EP 2 445 963 B1**
(45) Date of publication and mention of the grant of the patent: **30.10.2013**
(21) Application number: 10725677.8
(22) Date of filing: 16.06.2010
(51) Int. Cl.: C08L 23/12

(54) **AUTOMOTIVE INTERIOR ARTICLE WITH REDUCED SMELL**
GERUCHSNEUTRALE INNENBEKLEIDUNG FÜR KRAFTFAHRZEUGE
CONSTITUANT DE GARNITURE INTERIEURE D'AUTOMOBILE D'ODEUR NEUTRE

(30) Priority: 22.06.2009 EP 09163397
(43) Date of publication of application: 02.05.2012
(73) Proprietor: Borealis AG, 1220 Vienna (AT)
(72) Inventor: LEDERER, Klaus, A-4020 Linz (AT); OTTE, Michael, A-4560 Kirchdorf/Krems (AT); KASTNER, Erwin, A-4040 Linz (AT); BRAUN, Juliane, A-4040 Linz (AT); STOCKREITER, Wolfgang, A-4048 Puchenau (AT)
(74) Representative: Maiwald Patentanwalts GmbH
(86) International application number: PCT/EP2010/058432
(87) International publication number: WO 2010/149549

(56) References cited:
- EP-A1- 2 036 947
- WO-A1-03/072648
- WO-A1-2008/020925
- WO-A1-2010/057915

## Description

The present invention relates a new automotive interior article comprising phenolic antioxidants and the use of inosilicate in said article.

Polypropylene is the material of choice for many applications. For instance polypropylene in combination with talc is used as back sheets of blister packaging as well as in articles in the automotive interior. Said polypropylene/talc compositions are - generally speaking - good processable and can be individually customized. However such materials must also provide long term stability against environmental impacts, like oxidative degradation, keeping the tailored properties of the polypropylene/talc composition on the desired level. Accordingly antioxidants are added to impair the degradation of the polypropylene/talc compositions. However the antioxidants themselves may be instable under specific environmental stresses, which might lead also to malodour. Over the last years the standard requirements for long term stability have been even steadily tightened, which in turn increased the amounts of additives to satisfy the ambitioned desires, like heat resistance and/or mechanical properties. On the other hand such an increasing amount of additives intensifies the risk of side reactions. Such side reactions, in particular in cases where degradation of antioxidants is involved, lead to side products being quite often volatile. Of course volatile compounds should be kept on low levels in particular as they are not accepted by the customers. Additionally it has been observed that such compounds suffer from malodour.

Thus the object of the present invention is to reduce the sensory impression of smell of the automotive interior articles. A further object of the present invention is to reduce the amount of volatile compounds, in particular of 2-methyl-1-propene, in the automotive interior article. There is in particular the desire to reduce the sensory impression of smell measured according to VDA 270 and the amount of headspace emission according to VDA 277.

The first finding of the present invention is that the main cause of malodour is the rather rapid degradation of phenolic antioxidants in the presence of talc. The second finding of the present invention is that the degradation of the antioxidants can be reduced by substituting talc.

Thus the present invention is directed to an automotive interior article comprising at least 50 wt.-% based on said article of a polypropylene composition having a melt flow rate MFR₂ (230 °C) measured according to ISO 1133 of 2.0 to 80.0 g/10min, said polypropylene composition comprises as polymer components only a heterophasic polypropylene (H-PP1), a heterophasic polypropylene (H-PP2), and a high density polyethylene (HDPE), wherein said polypropylene composition comprises
(a) at least 25 wt.-% of the heterophasic polypropylene (H-PP1),
(b) at least 25 wt.-% of the heterophasic polypropylene (H-PP2),
(c) at least 3 wt.-% of the high density polyethylene (HDPE),
(d) 10,000 to 550,000 ppm inosilicate,
(e) 100 to 5,000 ppm of phenolic antioxidants, and
(f) optionally 100 to 5,000 ppm of phosphorous antioxidants based on the polymer composition,
   and further wherein
(g) said heterophasic polypropylene (H-PP1)
   (g1) comprises a polypropylene matrix being a propylene homopolymer and an elastomeric copolymer, said elastomeric copolymer comprises units from
      - propylene and
      - ethylene and/or C4 to C20 α-olefin
   (g2) has comonomer content of 8 to 30 wt.-% based on said heterophasic polypropylene (H-PP1), said comonomer is ethylene and/or at least one C4 to C20 α-olefin, and
   (g3) has a xylene cold soluble (XCS) content measured according to ISO 6427 of 15.0 to 40.0 wt.-%, based on the heterophasic polypropylene (H-PP1),
(h) said heterophasic polypropylene (H-PP2)
   (h1) comprises a polypropylene matrix being a propylene homopolymer and an elastomeric copolymer, said elastomeric copolymer comprises units from
      - propylene and
      - ethylene and/or C4 to C20 α-olefin
   (h2) has comonomer content of 1.0 to 20.0 wt.-% based on said heterophasic polypropylene (H-PP2), said comonomer is ethylene and/or at least one C4 to C20 α-olefin, and
   (h3) has a xylene cold soluble (XCS) content measured according to ISO 6427 of 5.0 to 30.0 wt.-%, based on the heterophasic polypropylene (H-PP2), and
   (h4) optionally a melt flow rate MFR₂ (230 °C) in the range of 10.0 to 40.0 g/10min,
   and
(i) said heterophasic polypropylene (H-PP2) differs from the heterophasic polypropylene (H-PP1) in the xylene cold soluble (XCS) content.

Preferably the automotive interior article and/or the polypropylene composition of said article is essentially free of any maleic anhydride or any grafted maleic anhydride polymers. Accordingly the amount of maleic anhydride or any grafted maleic anhydride polymer present in the automotive interior article and/or the polypropylene composition of said article is below 5 wt.-%, more preferably below 3 wt.-%, yet more preferably is not detectable, i.e. has not been used in the manufacture of the article and/or polypropylene composition.

To improve the sensory impression of smell and to obtain the desired reduction of volatiles, like 2-methyl-1-propene, by keeping the mechanical properties on the desired level, it is appreciated to use the inosilicate in the automotive interior article and/or in the polypropylene composition of said article in an amount from 10,000 to 550,000 ppm, preferably from 50,000 to 500,000 ppm, more preferably from 100,000 to 400,000 ppm, yet more preferably from 120,000 to 300,000 ppm.

As usual 1 ppm of additive corresponds to 1 mg additive in 1 kg composition.

Surprisingly it has been found out that the use of the inosilicate resolves the problem of the automotive interior articles comprising said specific heterophasic polypropylene (H-PP1), talc and phneolic antioxidants. The specific selection of inosilicate as a substitute of talc allows improving the sensory impression of smell as well as reducing drastically the headspace emission of all volatiles, in particular of 2-methyl-1-propene, compared to standard automotive interior articles comprising talc and phenolic antioxidants. Even more surprising the selection of the specific heterophasic polypropylene (H-PP1) and the substitute inosilicate leads to the aimed benefit without loose of the desired mechanical properties, like tensile modulus and/or flexural modulus (see table 1).

The term "volatiles" is understood according the present invention as substances which tend to vaporize from the automotive interior articles. More precisely "volatiles" are substances having a rather high vapour pressure and thus vaporize easily from the automotive interior articles. Thus volatiles according to the present invention are in particular substances having a normal boiling point (temperature at which the vapour pressure is equal to the surrounding atmospheric pressure (1.0 atm)) of not more than 80 °C, more preferably of not more than 70 °C, like not more than 60 °C. The volatiles can be any substances part of the automotive interior articles and are in particular degradation products cause by chemical and/or physical reactions (processes) within in the automotive interior articles. Typically the volatiles are degradation products of the additives of the automotive interior articles, like degradation products of the phenolic antioxidants. Most important representative of the volatiles is the 2-methyl-1-propene, probably a degradation product of the phenolic antioxidants. The amount of volatiles, like 2-methyl-1-propene, of the automotive interior articles is determined by VDA 277. The exact measuring method is described in the example section. The analysed amount of volatiles is given by the ratio of the amount [µgC] of volatiles (like 2-methyl-1-propene) to the total amount [g] of the polymer composition. Accordingly in one aspect the use of the an inosilicate in an automotive interior article accomplishes a headspace emission measured according to VDA 277 of all volatiles together of said automotive interior articles of equal or below 120 µgC/g, preferably below 100 µgC/g, more preferably below 80 µgC/g. still more preferably below 60 µgC/g, like below 50 µgC/g. In a second aspect or alternatively the use of the an inosilicate in the automotive interior articles accomplishes a headspace emission measured according to VDA 277 of 2-methyl-1-propene of said polymer composition of not more than 70 µgC/g, preferably below 20 µgC/g, more preferably below 10 µgC/g: still more preferably below 5 µgC/g, yet more preferably below 1.0 µgC/g, like below 0.7 µgC/g.

The expression "automotive interior article" throughout the present invention stands for all articles, preferably injection moulded articles, of the inside of automotive interior. Preferred articles are selected from the group consisting of dashboards, step assists, interior trims, ash trays, interior body panels and gear shift levers.

Further said automotive interior articles of the instant invention comprises, preferably consist of, a polypropylene composition as defined in detail below. The preferred amounts of the polypropylene composition within the automotive interior article is at least 50 wt.-%, more preferably at least 70 wt.-%, more preferably at least 90 wt.-%, yet more preferably 99.0 wt.-%, like 100 wt.-%, based on said article.

### The heterophasic polypropylene (H-PP1)

The heterophasic polypropylene (H-PP1) used in the instant polypropylene composition
(i) comprises a polypropylene matrix being a propylene homopolymer and an elastomeric copolymer, said elastomeric copolymer comprises units from
   - propylene and
   - ethylene and/or C4 to G20 α-olefin,
(ii) has comonomer content of 8 to 30 wt.-%, preferably 15.0 to 25.0 wt.-%, like 18.0 to 22.0 wt.-%, based on said heterophasic polypropylene (H-PP1), said comonomer is ethylene and/or at least one C4 to C20 α-olefin, and
(iii) has a xylene cold soluble (XCS) content measured according to ISO 6427 of 15.0 to 40.0 wt.-%, preferably 25.0 to 35.0 wt.-%, like 28.0 to 32.0 wt.-%, based on the heterophasic polyloropylene (H-PP1) and
(iv) optionally a melt flow rate MFR₂ (230 °C) in the range of 10.0 to 30.0 g/10min, more preferably in the range of 12.0 to 25.0 g/10min.

Considering the comonomer given above it is preferred that the propylene content in the heterophasic polypropylene (H-PP1) is 70.0 to 90.0 wt.-%, more preferably 75.0 to 85.0 wt.-%, like 78.0 to 82.0 wt.-%, based on the total heterophasic polypropylene (H-PP1), more preferably based on the amount of the polymer components of the heterophasic polypropylene (H-PP1), yet more preferably based on the amount of the matrix and the elastomeric copolymer together. The remaining part constitutes the comonomers, preferably ethylene.

As defined herein a heterophasic polypropylene (H-PP1) comprises as polymer components only the polypropylene matrix and the elastomeric copolymer. In other words the heterophasic polypropylene (H-PP1) may contain further additives but no other polymer in an amount exceeding 5 wt-%, more preferably exceeding 3 wt.-%, like exceeding 1 wt.-%, based on the total heterophasic polypropylene (H-PP1), more preferably based on the polymers present in the heterophasic polypropylene (H-PP1). One additional polymer which may be present in such low amounts is a polyethylene which is a reaction product obtained by the preparation of the heterophasic polypropylene (H-PP1). Accordingly it is in particular appreciated that a heterophasic polypropylene (H-PP1) as defined in the instant invention contains only a polypropylene matrix, an elastomeric copolymer and optionally a polyethylene in amounts as mentioned in this paragraph.

As stated above the polypropylene matrix is a propylene homopolymer. The expression propylene homopolymer used in the instant invention relates to a polypropylene that consists substantially, i.e. of more than 99.5 wt.-%, still more preferably of at least 99.7 wt.-%, like of at least 99.8 wt.-%, of propylene units. In a preferred embodiment only propylene units in the propylene homopolymer are detectable. The comonomer content can be determined with FT infrared spectroscopy, as described below in the examples.

Moreover, the amount of polypropylene matrix present in the heteropliasic polypropylene (H-PP1) corresponds as a first approximation with the xylene cold insoluble content (XCI). Accordingly the matrix content, i.e. the xylene cold insoluble (XCI) content, in the heterophasic polypropylene (H-PP1) is preferably in the range of 60.0 to 85.0 wt.-%, more preferably in the range of 65.0 to 75.0 wt.-%, like 68.0 to 72.0 wt.-%. In case polyethylene is present in the heterophasic polypropylene (H-PP1), the values for the polypropylene matrix content but not for the xylene cold insoluble (XCI) content may be a bit decreased i.e. by not more than 5 wt-%, more preferably not more than 3 wt.-%, like not more than 1 wt.-%, based on the total heterophasic polypropylene (H-PP1), more preferably based on the polymers present in the heterophasic polypropylene (H-PP1).

On the other hand the elastomeric copolymer content, i.e. the xylene cold soluble (XCS) content, in the heterophasic polypropylene (H-PP1) is preferably in the range of 15.0 to 40.0 wt.-%, more preferably 25.0 to 35.0 wt.-%, like 28.0 to 32.0 wt.-%.

Further and preferably the polypropylene matrix has a rather high melt flow rate. Accordingly, it is preferred that in the present invention the polypropylene matrix of the heterophasic polypropylene (H-PP1) has an MFR₂ (230 °C) in a range of 5.0 to 200.0 g/10 min, more preferably of 60.0 to 150.0 g/10 min, still more preferably of 70.0 to 100.0 g/10 min.

Preferably the polypropylene matrix is isotactic. Accordingly it is appreciated that the polypropylene matrix has a rather high pentad concentration, i.e. higher than 80 %, more preferably higher than 85 %, yet more preferably higher than 90 %, still more preferably higher than 92 %, still yet more preferably higher than 93 %, like higher than 95 %.

In principle the polypropylene matrix can be multimodal, like bimodal, however it is preferred that it is unimodal (concerning the definition of the modality see below).

The second component of the heterophasic polypropylene (H-PP1) is the elastomeric copolymer.

The elastomeric copolymer comprises, preferably consists of, units derivable from (i) propylene and (ii) ethylene and/or at least another C4 to C20 α-olefin, like C4 to C10 α-olefin, more preferably units derivable from (i) propylene and (ii) ethylene and at least another α-olefin selected form the group consisting of 1-butene, 1-pentene, 1-hexene, 1-heptene and 1-octane. The elastomeric copolymer may additionally contain units derived from a conjugated diene, like butadiene, or a non-conjugated diene, however it is preferred that the elastomeric copolymer consists of units derivable from (i) propylene and (ii) ethylene and/or C4 to C20 α-olefins only. Suitable non-conjugated dienes, if used, include straight-chain and branched-chain acyclic dienes, such as 1,4-hexadiene, 1,5-hexadiene, 1,6-octadiene, 5-methyl-1, 4-hexadiene, 3,7-dimethyl-1,6-octadiene, 3,7-dimethyl-1,7-octadiene, and the mixed isomers of dihydromyrcene and dihydro-ocimene, and single ring alicyclic dienes such as 1,4-cyclohexadiene, 1,5-cyclooctadiene, 1,5-cyclododecadiene, 4-vinyl cyclohexene, 1-allyl-4-isopropylidene cyclohexane, 3-allyl cyclopentene, 4-cyclohexene and 1-isopropenyl-4-(4-butenyl) cyclohexane. Multi-ring alicyclic fused and bridged ring dienes are also suitable including tetrahydroindene, methyltetrahydroindene, dicyclopentadiene, bicyclo (2,2,1) hepta-2,5-diene, 2-methyl bicycloheptadiene, and alkenyl, alkylidene, cycloalkenyl and cycloalkylidene norbornenes, such as 5-methylene-2-norbornene, 5-isoloropylidene norbonene, 5-(4-cyclopentenyl)-2-norbornene; and 5-cyclohexylidene-2-norbornene. Preferred non-conjugated dienes are 5-ethylidene-2-norbornene, 1,4-hexadiene and dicyclopentadiene.

Accordingly the elastomeric copolymer comprises at least units derivable from propylene and ethylene and may comprise other units derivable from a further α-olefin as defined in the previous paragraph. However it is in particular preferred that elastomeric copolymer comprises units only derivable from propylene and ethylene and optionally a non-conjugated diene as defined in the previous paragraph, like 1,4-hexadiene. Thus an ethylene propylene non-conjugated diene monomer polymer (EPD) and/or an ethylene propylene rubber (EPR) as elastomeric copolymer is especially preferred, the latter most preferred.

In the present invention the content of units derivable from propylene in the elastomeric copolymer equates with the content of propylene detectable in the xylene cold soluble (XCS) fraction. Accordingly the propylene detectable in the xylene cold soluble (XCS) fraction ranges from 40.0 to 75.0 wt.-%, more preferably 50.0 to 70.0 wt.-%. Thus in a specific embodiment the elastomeric copolymer, i.e. the xylene cold soluble (XCS) fraction, comprises from 25.0 to 60.0 wt.-%, more preferably 30.0 to 50.0 wt.-%, units derivable from ethylene. Preferably the elastomeric copolymer is an ethylene propylene (non-)conjugated diene monomer polymer (EPDM) or an ethylene propylene rubber (EPR), the latter especially preferred, with a propylene and/or ethylene content as defined in this paragraph.

Like the matrix the elastomeric copolymer can be unimodal or multimodal, like bimodal, the latter being preferred.

The expression "multimodal" or "bimodal" used throughout the present invention refers to the modality of the polymer, i.e.
■ the form of its molecular weight distribution curve, which is the graph of the molecular weight fraction as a function of its molecular weight,
   and / or
■ the form of its comonomer content distribution curve, which is the graph of the comonomer content as a function of the molecular weight of the polymer fractions.

As will be explained below, the heterophasic polypropylenes as well their individual components (matrix and elastomeric copolymer) can be produced by blending different polymer types, i.e. of different molecular weight and/or comonomer content. However it is preferred that the heterophasic polypropylenes as well their individual components (matrix and elastomeric copolymer) are produced in a sequential step process, using reactors in serial configuration and operating at different reaction conditions. As a consequence, each fraction prepared in a specific reactor will have its own molecular weight distribution and/or comonomer content distribution.

In the present invention the elastomeric copolymer is at least bimodal in view of the comonomer, preferably ethylene content. Accordingly the heterophasic polypropylene (H-PP1) comprises a first elastomeric copolymer and a second elastomeric copolymer. The first elastomeric copolymer is polypropylene rich, i.e. has a propylene content of at least 40.0 wt.-%, preferably of at least 50.0 wt.-%, more preferably of at least 55.0 wt.-%, and has a rather high intrinsic viscosity (IV), i.e. higher than 3.5 dl/g, preferably higher than 4.0 dl/g, more preferably higher than 4.5 dl/g. On the other hand the second elastomeric copolymer is propylene lean, i.e. below 50.0 wt.-%, preferably below 45.0 wt.-%, more preferably below 40.0 wt.-%, and has a rather low intrinsic viscosity (IV), preferably from 1.4 to 1.7 dl/g, more preferably from 1.4 to 1.9 dl/g, yet more preferably from 1.4 to 2.1 dl/g.

A further preferred requirement of the present invention is that the intrinsic viscosity (IV) of the xylene cold soluble (XCS) fraction, i.e. of the first and second elsotomeric copolymer together, of the heterophasic polypropylene (H-PP1) is rather high. Rather high values of intrinsic viscosity improve the impact strength. Accordingly it is appreciated that the intrinsic viscosity of the xylene cold soluble (XCS) fraction of the heterophasic polypropylene (H-PP1) is above 2.5 dl/g, more preferably at least 2.8 dl/g, yet more preferably at least 3.0 dl/g, like at least 3.3 dl/g. On the other hand the intrinsic viscosity should be not too high otherwise the flowability is decreased. Thus the intrinsic viscosity of the xylene cold soluble (XCS) fraction of the heterophasic polypropylene (H-PP1) is preferably in the range of 2.5 to 4.5 dl/g, more preferably in the range 3.0 to 4.1 dl/g, still more preferably 3.3 to 4.0 dl/g. The intrinsic viscosity is measured according to ISO 1628 in decaline at 135 °C.

Especially preferred the heterophasic polypropylene is the commercial product EF 015 E of Borcalsi AG.

The heterophasic polypropylene (H-PP1) is preferably produced in a multistage process known in the art. Accordingly the heterophasic polypropylene (H-PP1) is produced by applying the following steps of
(1) polymerizing propylene in at least one reactor, preferably in one or more bulk reactor(s), preferably loop reactor, and/or in one or more gas phase reactor (s), wherein the reactors are typically connected in series, to obtain the polypropylene matrix,
(2) transferring said polypropylene matrix in a further reactor, preferably a gas phase reactor,
(3) producing the elastomeric copolymer by polymerizing propylene and further comonomer(s) as defined above, preferably ethylene, in the presence of said polypropylene to obtain the elastomeric copolymer dispersed in said polypropylene matrix,
(4) preferably transferring said mixture to a further gas phase reactor to produce a second elastomeric copolymer by polymerizing propylene and further comonomer(s) as defined above, preferably ethylene, in the presence of said mixture of step (1.3) to obtain the second elastomeric copolymer dispersed also in said polypropylene matrix, i.e. leading to the heterophasic polypropylene (H-PP1),
(5) removing said heterophasic polypropylene (H-PP1) from the reactor.

The polymerization can be carried out in the presence of a metallocene catalyst or Ziegler-Natta-type catalyst, the latter is in particular preferred.

A Ziegler-Natta type catalyst typically used in the present invention for propylene polymerization is a stereospecific, high yield Ziegler-Natta catalyst comprising as essential components Mg, Ti, Al and Cl. These type of catalysts comprise typically in addition to a solid transition metal (like Ti) component a cocatalyst(s) as well external donor(s) as stereoregulating agent.

These compounds may be supported on a particulate support, such as inorganic oxide, like silica or alumina, or, usually, the magnesium halide may form the solid support. It is also possible that solid catalysts are self supported, i.e. the catalysts are not supported on an external support, but are prepared via emulsion-solidification method.

The solid transition metal component usually also comprises an electron donor (internal electron donor). Suitable internal electron donors are, among others, esters of carboxylic acids, like phthalates, citraconates, and succinates. Also oxygen- or nitrogen-containing silicon compounds may be used.

The cocatalyst used in combination with the transition metal compound typically comprises an aluminium alkyl compound. The aluminium alkyl compound is preferably trialkyl aluminium such as trimethylaluminium, triethylaluminium, tri-isobutylaluminium or tri-n-octylaluminium. However, it may also be an alkylaluminium halide, such as diethylaluminium chloride, dimethylaluminium chloride and ethylaluminium sesquichloride.

Preferably the catalyst also comprises an external electron donor. Suitable electron donors known in the art include ethers, ketones, amines, alcohols, phenols, phosphines and silanes. Silane type external donors are typically organosilane compounds containing Si-OCOR, Si-OR, or Si-NR₂ bonds, having silicon as the central atom, and R is an alkyl, alkenyl, aryl, arylalkyl or cycloalkyl with 1-20 carbon atoms are known in the art.

Examples of suitable catalysts and compounds in catalysts are shown in among others, in WO 87/07620, WO 92/21705, WO 93/11165, WO 93/11166, WO 93/19100, WO 97/36939, WO 98/12234, WO 99/33842, WO 03/000756, WO 03/000757, WO 03/000754, WO 03/000755, WO 2004/029112, WO 92/19659, WO 92/19653, WO 92/19658, US 4382019, US 4435550, US 4465782, US 4473660, US 4560671, US 5539067, US5618771, EP45975, EP45976, EP45977, WO 95/32994, US 4107414, US 4186107, US 4226963, US 4347160, US 4472524, US 4522930, US 4530912, US 4532313, US 4657882, US 4581342, US 4657882.

In the present invention a Ziegler Natta catalyst, e.g. an inorganic halide (e.g. MgCl₂) supported titanium catalyst or self supported solid Ziegler Natta catalysts, together with an aluminium alkyl (e.g. triethylaluminium) cocatalyst are preferably employed. Silanes, e.g. dicyclopentanedimethoxysilane (DCPDMS) or cyclohexylmethyldimethoxysilane (CHMDMS), may be typically used as external donors. The catalyst in the second polymerization stage is typically the same that is used in the first polymerization stage.

According to a preferred embodiment, the heterophasic polypropylene (H-PP1) is produced in a reactor system comprising at least one bulk reaction zone including at least one bulk reactor and at least one gas phase reaction zone including at least one gas phase reactor, preferably two gas phase reactors. The polymerization of polypropylene matrix of the heterophasic polypropylene (H-PP1) is preferably carried out in a loop reactor and optionally in a further gas phase reactor.

Hydrogen can be used in different amounts as a molar mass modifier or regulator in any or every reactor in the first and second polymerization stage.

A separation stage can be employed between the reaction zones to prevent the carryover of reactants from the first polymerization stage into the second one.

In addition to the actual polymerization reactors used, the polymerization reaction system can also include a number of additional reactors, such as pre-reactors. The pre-reactors include any reactor for pre-activating and/or pre-polymerizing the catalyst with propylene and/or other α-olefin(s), like ethylene, if necessary. All reactors in the reactor system are preferably arranged in series.

### The heterophasic polypropylene (H-PP2)

The heterophasic polypropylene (H-PP2) used in the instant polypropylene composition
(i) comprises a polypropylene matrix being a propylene homopolymer and an elastomeric copolymer, said elastomeric copolymer comprises units from
   - propylene and
   - ethylene and/or C4 to C20 α-olefin,
(ii) has comonomer content of 1.0 to 20.0 wt.-%, preferably 3.0 to 15.0 wt.-%, like 7.0 to 12.0 wt.-%, based on said heterophasic polypropylene (H-PP2), said comonomer is ethylene and/or at least one C4 to C20 α-olefin, and
(iii) has a xylene cold soluble (XCS) content measured according to ISO 6427 of 5.0 to 30.0 wt.-%, preferably 12.0 to 25.0 wt.-%, like 16.0 to 20.0 wt.-%, based on the heterophasic polypropylene and
(iv) optionally a melt flow rate MFR₂ (230 °C) in the range of 10.0 to 40.0 g/10min, more preferably in the range of 18.0 to 30.0 g/10min.

Preferably the melt flow rate MFR₂ (230 °C) of the heterophasic polypropylene (H-PP2) is lower compared to the melt flow rate MFR₂ (230 °C) of the heterophasic polypropylene (H-PP1).

Considering the comonomer given above it is preferred that the propylene content in the heterophasic polypropylene (H-PP2) is 80.0 to 99.0 wt.-%, more preferably 85.0 to 97.0 wt.-%, like 90.0 to 95.0 wt.-%, based on the total heterophasic polypropylene (H-PP2), more preferably based on the amount of the polymer components of the heterophasic polypropylene (H-PP2), yet more preferably based on the amount of the matrix and the elastomeric copolymer together. The remaining part constitutes the comonomers, preferably ethylene.

As defined herein a heterophasic polypropylene (H-PP2) comprises as polymer components only the polypropylene matrix and the elastomeric copolymer. In other words the heterophasic polypropylene (H-PP2) may contain further additives but no other polymer in an amount exceeding 5 wt-%, more preferably exceeding 3 wt.-%, like exceeding I wt.-%, based on the total heterophasic polypropylene (H-PP2), more preferably based on the polymers present in the heterophasic polypropylene (H-PP2). One additional polymer which may be present in such low amounts is a polyethylene which is a reaction product obtained by the preparation of the heterophasic polypropylene (H-PP2). Accordingly it is in particular appreciated that a heterophasic polypropylene (H-PP2) as defined in the instant invention contains only a polypropylene matrix, an elastomeric copolymer and optionally a polyethylene in amounts as mentioned in this paragraph.

As stated above the polypropylene matrix is a propylene homopolymer.

Moreover, the amount of polypropylene matrix present in the heterophasic polypropylene (H-PP2) corresponds as a first approximation with the xylene cold insoluble content. Accordingly the matrix content, i.e. the xylene cold insoluble (XCI) content, in the heterophasic polypropylene (H-PP2) is preferably in the range of 80.0 to 95.0 wt.-%, more preferably in the range of 82.0 to 92.0 wt.-%, like 84.0 to 90.0 wt.-%. In case polyethylene is present in the heterophasic polypropylene (H-PP2), the values for the polypropylene matrix content but not for the xylene cold insoluble (XCI) content may be a bit decreased i.e. by not more than 5 wt-%, more preferably not more than 3 wt.-%, like not more than 1 wt.-%, based on the total heterophasic polypropylene (H-PP2), more preferably based on the polymers present in the heterophasic polypropylene (H-PP2).

On the other hand the elastomeric copolymer content, i.e. the xylene cold soluble (XCS) content, in the heterophasic polypropylene (H-PP2) is preferably in the range of 5.0 to 20.0 wt.-%, more preferably 8.0 to 18.0 wt.-%, like 10.0 to 16.0 wt.-%.

Preferably the polypropylene matrix is isotactic. Accordingly it is appreciated that the polypropylene matrix has a rather high pentad concentration, i.e. higher than 80 %, more preferably higher than 85 %, yet more preferably higher than 90 %, still more preferably higher than 92 %, still yet more preferably higher than 93 %, like higher than 95 %.

In principle the polypropylene matrix can be multimodal, like bimodal, however it is preferred that it is unimodal.

The second component of the heterophasic polypropylene (H-PP2) is the elastomeric copolymer.

The elastomeric copolymer comprises, preferably consists of, units derivable from (i) propylene and (ii) ethylene and/or at least another C4 to C20 α-olefin, like C4 to C10 α-olefin, more preferably units derivable from (i) propylene and (ii) ethylene and at least another α-olefin selected form the group consisting of 1-butene, 1-pentene, 1-hexene, 1-heptene and 1-octene. The elastomeric copolymer may additionally contain units derived from a conjugated diene, like butadiene, or a non-conjugated diene, however it is preferred that the elastomeric copolymer consists of units derivable from (i) propylene and (ii) ethylene and/or C4 to C20 α-olefins only. Suitable non-conjugated dienes, if used, include straight-chain and branched-chain acyclic dienes, such as 1,4-hexadiene, 1,5-hexadiene, 1,6-octadiene, 5-methyl-1, 4-hexadiene, 3,7-dimethyl-1,6-octadiene, 3,7-dimethyl-1,7-octadiene, and the mixed isomers of dihydromyrcene and dihydro-ocimene, and single ring alicyclic dienes such as 1,4-cyclohexadiene, 1,5-cyclooctadiene, 1,5-cyclododecadiene, 4-vinyl cyclohexene, 1-allyl-4-isopropylidene cyclohexane, 3-allyl cyclopentene, 4-cyclohexene and 1-isopropenyl-4-(4-butenyl) cyclohexane. Multi-ring alicyclic fused and bridged ring dienes are also suitable including tetrahydroindene, methyltetrahydroindene, dicyclopentadiene, bicyclo (2,2,1) hepta-2,5-diene, 2-methyl bicycloheptadiene, and alkenyl, alkylidene, cycloalkenyl and cycloalkylidene norbornenes, such as 5-methylene-2-norbornene, 5-isopropylidene norbornene, 5-(4-cyclopentenyl)-2-norbornene; and 5-cyclohexylidene-2-norbornene. Preferred non-conjugated dienes are 5-ethylidene-2-norbornene, 1,4-hexadiene and dicyclopentadiene.

Accordingly the elastomeric copolymer comprises at least units derivable from propylene and ethylene and may comprise other units derivable from a further α-olefin as defined in the previous paragraph. However it is in particular preferred that elastomeric copolymer comprises units only derivable from propylene and ethylene and optionally a non-conjugated diene as defined in the previous paragraph, like 1,4-hexadiene. Thus an ethylene propylene (non-)conjugated diene monomer polymer (EPD) and/or an ethylene propylene rubber (EPR) as elastomeric copolymer is especially preferred, the latter most preferred.

In the present invention the content of units derivable from propylene in the elastomeric copolymer equates with the content of propylene detectable in the xylene cold soluble (XCS) fraction. Accordingly the propylene detectable in the xylene cold soluble (XCS) fraction ranges from 55.0 to 75.0 wt.-%, more preferably 58.0 to 70.0 wt.-%. Thus in a specific embodiment the elastomeric copolymer, i.e. the xylene cold soluble (XCS) fraction, comprises from 25.0 to 45.0 wt.-%, more preferably 30.0 to 42.0 wt.-%, units derivable from ethylene. Preferably the elastomeric copolymer is an ethylene propylene non-conjugated diene monomer polymer (EPDM) or an ethylene propylene rubber (EPR), the latter especially preferred, with a propylene and/or ethylene content as defined in this paragraph.

Like the matrix the elastomeric copolymer can be unimodal or multimodal, like bimodal.

A further preferred requirement of the present invention is that the intrinsic viscosity (IV) of the xylene cold soluble (XCS) fraction of the heterophasic polypropylene (H-PP2) is rather low. Accordingly it is appreciated that the intrinsic viscosity of the xylene cold soluble (XCS) fraction of the heterophasic polypropylene (H-PP2) is below 2.8 dl/g, more preferably below 2.6 dl/g, yet more preferably in the range of 1.8 to 2.8 dl/g, more preferably in the range 2.0 to 2.6 dl/g. The intrinsic viscosity is measured according to ISO 1628 in decaline at 135 °C.

The preparation of the heterophasic polypropylene (H-PP2) is preferably also obtained in a multistage process well known in the art and described in more detail above for the heterophasic polypropylene (H-PP1).

### High density polyethylene (HDPE)

If present, the high density polyethylene (HDPE) has preferably a density measured according to ISO 1183in the range of 0.954 to 0.966 g/cm³ and a melt flow rate (MFR₂ at 190 °C) of 0.1 to 15.0 g/10min, more preferably from 5.0 to 10.0 g/10min.

### Polypropylene Composition

In the following the polypropylene composition comprising the individual polymers as defined above will be defined in more detail.

Preferably the polypropylene composition of the automotive interior articles has a melt flow rate MFR₂ (230 °C) measured according to ISO 1133 of 2.0 to 80.0 g/10min, preferably of 5.0 to 50.0 g/10min, more preferably 7.0 to 30.0 g/10min.

Further the polypropylene composition comprises apart from the additives as defined below a polypropylene or a mixture of polypropylenes and further polymers in an amount of at least 50.0 wt.-% , more preferably at least 60.0 wt.-%, yet more preferably at least 70.0 wt.-%, still more preferably of at least 75.0 wt.-%. Preferably the polypropylene composition comprises additionally 5 to 15 wt.-% of a high density polyethylene (HDPE) based on the polypropylene composition.

In one embodiment of the present invention the polypropylene composition being part in the automotive interior comprises as polymer components only the heterophasic polypropylene (H-PP1), the heterophasic polypropylene (H-PP2), and the high density polyethylene (HDPE). In such a case the polypropylene composition comprises
(a) at least 25.0 wt.-%, more preferably at least 30.0 wt.-%, yet more preferably 25.0 to 45.0 wt.-%, like 30.0 to 40.0 wt.-%, of the heterophasic polypropylene (H-PP1) and
(b) at least 25.0 wt.-%, more preferably at least 30.0 wt.-%, yet more preferably 25.0 to 45.0 wt.-%, like 30.0 to 40.0 wt.-%, of the heterophasic polypropylene (H-PP2) and
(c) at least 3.0 wt.-%, more preferably at least 5.0 wt.-%, still more preferably 5.0 15.0 wt.-%, like 8.0 to 12.0 wt.-%, of the high density polyethylene (HDPE),
based on the polypropylene composition.

Beside the polypropylene the polypropylene composition is in particular defined by its additives.

Accordingly to be useful as an automotive interior article the polypropylene composition must comprise an inorganic reinforcing agent. Talc is normally the additive of choice. However it has been discovered in the present invention that talc promotes the degradation of phenolic antioxidants and thus increases undesirably the amount of volatiles, in particular of 2-methyl-1-propene. Such a degradation of phenolic antioxidants is in particular pronounced in case the talc comprises a considerable amount of residues within in the talc, like iron oxide (FeO) and/or iron silicate. The degradation of the organic oxidants can be very easily deducted in the headspace emission according to VDA 277. The emission spectrum shows degradation products (for instance 2-methyl-1-propene) originating from the phenolic antioxidants.

One possible approach to reduce the amount of volatiles, like 2-methyl-1-propene, is to impede the catalytic activity of talc and/or its residues in view of the phenolic antioxidants. However the addition of further additives to prevent degradation of the phenolic antioxidants may cause other problems and thus it was sought for an alternative approach enabling also a significant reduction of volatiles, like 2-methyle-1-propene, measured according to VDA 277.

The present invention has now found out that the replacement of talc by inosilicate(s) can also significantly reduce the amount of volatiles, in particular of 2-methyl-1-propene, measured as the headspace emission according to VDA 277. More importantly such a substitution does not alter substantially the mechanical properties of the automotive interior article due to the specific selection of the heterophasic polypropylene (H-PP1) present in the polypropylene composition. A further finding of the present invention is that not only the amount of volatiles can be reduced due to the specific substitution of talc but also can reduces the smell disturbances measured according the smell detection method according to VDA 270.

Preferably the inosilicate(s) used for the reduction of volatiles of polymer composition is/are (a) single chain inosilicate(s). Even more preferred the inosilicate(s) is/are from the pyroxenoid group. The most preferred inosilicate is Wollastonite (Ca₃[Si₃O₉]), like the commercial products NYGLOS 8 (NYCO, USA) and/or NYAD 400 (NYCO, USA).

Preferably the inosilicate(s) according to this invention has/have a particle size (d50%) of below 15.0 µm (d50% indicates that 50 wt-% of the inosilicate has a particle size below 15.0 µm), more preferably in the range of 1.0 to 10.0 µm and/or a particle size (d90%) of below 100.0 µm (d90% indicates that 90 wt-% of the inosilicate has a particle size below 100.0 µm), more preferably in the range of 5.0 to 50.0 µm. Furthermore, the inosilicate(s) according to this invention has/have an average aspect ratio above 4:1, more preferably in the range of 5:1 to 20:1.

It is further appreciated that the automotive interior article and/or the polypropylene composition part of said article does/do not contain a considerable amount of talc, i.e. does/do not contain more than 5 wt.-%, more preferably not more than 3 wt.-%, yet more preferably not more than 1 wt.-%, still more preferably not more than 0.5 wt.-%, of talc. In a preferred embodiment talc is not detectable within the automotive interior article and/or the polypropylene composition part of said article. In a particular preferred embodiment the article does not comprise talc.

As indicated above, the increase of volatiles is in particular observed due to the presence of phenolic antioxidants as they can be degraded due to polymeric environment, i.e. due to other additives like talc. However antioxidants are needed to impair oxidative degradation of the polypropylene. Accordingly the the automotive interior article and/or the polypropylene composition part of said article for which the inosilicate(s) is/are used preferably contain(s) phenolic antioxidants.

The term "phenolic antioxidant" as used in the instant invention stands for any compound capable of slowing or preventing the oxidation of the polymer component, i.e. the polypropylene. Additionally such a phenolic antioxidant must of course comprise a phenolic residue.

Better results can be achieved in case the phenolic antioxidants are sterically hindered. The term "Sterically hindered" according to this invention means that the hydroxyl group (HO-) of the phenolic antioxidants is surrounded by sterical alkyl residues.

Accordingly the phenolic antioxidants preferably comprise the residue of formula (I) 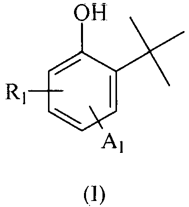 wherein
R₁ being located at the ortho- or meta-position to the hydroxyl-group and R₁ is (CH₃)₃C-, CH₃- or H, preferably (CH₃)₃C-, and
A₁ constitutes the remaining part of the phenolic antioxidant and is preferably located at the para-position to the liydroxyl-group.

Preferably the phenolic antioxidants preferably comprise the residue of formula (Ia) 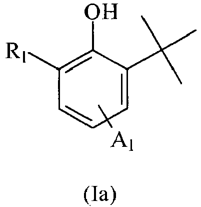 wherein
R₁ is (CH₃)₃C-, CH₃- or H, preferably (CH₃)₃C-, and
A₁ constitutes the remaining part of the phenolic antioxidant.

Preferably A₁ is in para-position to the hydroxyl-group.

Additionally the phenolic antioxidants shall preferably exceed a specific molecular weight. Accordingly the phenolic antioxidants have preferably a molecular weight of more than 785 g/mol, more preferably more than 1100 g/mol. On the other hand the molecular weight should be not too high, i.e. not higher than 1300 g/mol. A preferred range is from 785 to 1300 g/mol, more preferably from 1000 to 1300 g/mol, yet more preferably from 1100 to 1300 g/mol.

Further the phenolic antioxidants can be additionally defined by the amount of phenolic residues, in particular by the amount of phenolic residues of formula (I) or (Ia). Accordingly the phenolic antioxidants may comprise(s) 1, 2, 3, 4 or more phenolic residues, preferably 1, 2, 3, 4 or more phenolic residues of formula (I) or (Ia).

Moreover the phenolic antioxidants comprise mainly only carbon atoms, hydrogen atoms and minor amounts of O-atoms, mainly caused due to the hydroxyl group (HO-) of the phenolic residues. However the phenolic antioxidants may comprise additionally minor amounts of N, S and P atoms. Preferably the phenolic antioxidants are constituted by C, H, O, N and S atoms only, more preferably the phenolic antioxidants are constituted by C, H and O only.

As stated above the phenolic antioxidants shall have a rather high molecular weight. A high molecular weight is an indicator for several phenolic residues. Thus it is in particular appreciated that the phenolic antioxidants have 4 or more, especially 4, phenolic residues, like the phenolic residue of formula (I) or (Ia).

As especially suitable phenolic antioxidants have been recognized compounds comprising at least one residue of formula (II) 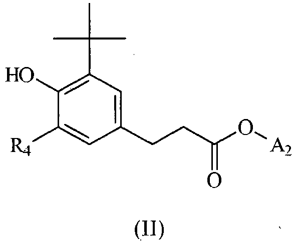 wherein
R₄ is (CH₃)₃C-, CH₃-, or H, preferably (CH₃)₃C-, and
A₂ constitutes the remaining part of the phenolic antioxidant.

Considering the above requirements the phenolic antioxidants are preferably selected from the group consisting of
2,6-di-tert-butyl-4-methylphenol (CAS no. 128-37-0; M 220 g/mol),
pentaerythrityl-tetrakis (3-(3,5-di-tert-butyl-4-hydroxyphenyl) propionate (CAS no. 6683-19-8; M 1178 g/mol),
octadecyl 3-(3',5'-di-tert-butyl-4-hydroxyphenyl)propionate (CAS no. 2082-79-3; M 531 g/mol)
1,3,5-trimethyl-2,4,6-tris-(3,5-di-tert-butyl-4-hydroxybenzyl) benzene (CAS no. 1709-70-2; M 775 g/mol),
2,2'-thiodiethylenebis (3,5-di-tert.-butyl-4-hydroxyphenyl) propionate (CAS no. 41484-35-9; M 643 g/mol),
calcium bis(ethyl 3,5-di-tert-butyl-4-hydroxybenzylphosphonate) (CAS no. 65140-91-2; M 695 g/mol),
1,3,5-tris(3',5'-di-tert. butyl-4'-hydroxybenzyl)-isocyanurate (CAS no. 27676-62-6, M 784 g/mol),
1,3,5-tris(4-tert. butyl-3-hydroxy-2,6-dimethylbenzyl)-1,3,5-triazine-2,4,6-(1H,3H,5H)-trione (CAS no. 40601-76-1, M 813 g/mol),
bis(3,3-bis(3'-tert-butyl-4'-hydroxyphenyl)butanic acid) glycolester (CAS no. 32509-66-3; M 794 g/mol),
4,4'-thiobis(2-tert-butyl-5-methylphenol) (CAS no. 96-69-5; M 358 g/mol),
2,2'-methylene-bis-(6-(1-methyl-cyclohexyl)-para-cresol) (CAS no. 77-62-3; M 637 g/mol),
3,3'-bis(3,5-di-tert-butyl-4-hydroxyphenyl)-N,N'-hexamethylenedipropionamide (CAS no. 23128-74-7; M 637 g/mol),
2,5,7,8-tetramethyl-2-(4',8',12'-trimethyltridecyl)-chroman-6-ol (CAS no. 10191-41-0; M 431 g/mol),
2,2-ethylidenebis (4,6-di-tert-butylphenol) (CAS no. 35958-30-6; M 439 g/mol),
1,1,3-tris(2-methyl-4-hydroxy-5'-tert-butylphenyl) butane (CAS no. 1843-03-4; M 545 g/mol),
3,9-bis(1,1-dimethyl-2-(beta-(3-tert-butyl-4-hydroxy-5-methylphenyl)propionyloxy)ethyl)-2,4,8,10-tetraoxaspiro[5.5]undecane (CAS no. 90498-90-1; M 741 g/mol),
1,6-hexanediyl-bis(3,5-bis(1,1dimethylethyl)-4-hydroxybenzene)propanoate) (CAS no. 35074-77-2; M 639 g/mol),
2,6-di-tert-butyl-4-nonylphenol (CAS no. 4306-88-1; M 280 g/mol),
4,4'-butylidenebis(6-tert-butyl-3-methylphenol (CAS no. 85-60-9; M 383 g/mol);
2,2'-methylene bis(6-tert-butyl-4-methylphenol) (CAS no. 119-47-1; M 341 g/mol),
triethylenglycol-bis-(3-tert-butyl-4-hydroxy-5-methylphenyl) propionate (CAS no. 36443-68-2: M 587 g/mol),
a mixture of C13 to C15 linear and branched alkyl esters of 3-(3',5'-di-t-butyl-4'-hydroxyphenyl) propionic acid (CAS no. 171090-93-0; M_{w} 485 g/mol),
6,6'-di-tert-butyl-2,2'-thiodip-cresol (CAS no. 90-66-4; M 359 g/mol),
diethyl-(3,5-di-tert-butyl-4-lydroxybenzyl) phosphate (CAS no. 976-56-7; M 356 g/mol),
4,6-bis (octylthiomethyl)-o-cresol (CAS no. 110553-27-0; M 425 g/mol),
benzenepropanoic acid, 3,5-bis(1,1-dimehtyl-ethyl)-4-hydroxy-,C7-C9-branched and linear alkyl esters (CAS no. 125643-61-0; M_{w} 399 g/mol),
1,1,3-tris[2-methyl-4-[3-(3,5-di-tert-butyl-4-hydroxyphenyl)propionyloxy]-5-tert-butylphenyl]butane (CAS no. 180002-86-2; M 1326 g/mol),
mixed styrenated phenols (M ca 320 g/mol; CAS no. 61788-44-1; M ca. 320 g/mol),
butylated, octylated phenols (M ca 340 g/mol; CAS no. 68610-06-0; M ca 340 g/mol), and
butylated reaction product of p-cresol and dicyclopentadiene (M_{w} 700 to 800 g/mol; CAS no. 68610-51-5; M_{w} 700 - 800 g/mol).

More preferably the phenolic antioxidants are selected from the group consisting of
pentaerythrityl-tetrakis (3-(3,5-di-tert-butyl-4-hydroxyphenyl) propionate (GAS no. 6683-19-8; M 1178 g/mol),
octadecyl 3-(3',5'-di-tert-butyl-4-hydroxyphenyl)propionate (CAS no. 2082-79-3; M 531 g/mol)
bis(3,3-bis(3'-tert-butyl-4'-hydroxyphenyl)butanic acid) glycolester (CAS no. 32509-66-3; M 794 g/mol),
3,3'-bis(3,5-di-tert-butyl-4-hydroxyphenyl)-N,N'-hexamethylenedipropionamide (CAS no. 23128-74-7; M 637 g/mol),
3,9-bis(1,1-dimethyl-2-(beta-(3-tert-butyl-4-hydroxy-5-methylphenyl)propionyloxy)ethyl)-2,4,8,10-tetraoxaspiro[5.5]undecane (CAS no. 90498-90-1; M 741 g/mol),
1,6-hexanediyl-bis(3,5-bis(1,1dimethylethyl)-4-hydroxybenzene)propanoate) (CAS no. 35074-77-2; M 639 g/mol),
triethylenglycol-bis-(3-tert-butyl-4-hydroxy-5-methylphenyl) propionate (CAS no. 36443-68-2; M 587 g/mol),
a mixture of C13 to C15 linear and branched alkyl esters of 3-(3',5'-di-t-butyl-4'-hydroxyphenyl) propionic acid (CAS no. 171090-93-0; M_{w} 485 g/mol), and
benzenepropanoic acid, 3,5-bis(1,1-dimehtyl-ethyl)-4-hydroxy-,C7-C9-branched and linear alkyl esters (CAS no. 125643-61-0; M_{w} 399 g/mol),

The most preferred phenolic antioxidant is pentaerythrityl-tetrakis (3-(3,5-di-tert-butyl-4-hydroxyphenyl) propionate (CAS no. 6683-19-8; M 1178 g/mol) preferably having the formula (III)

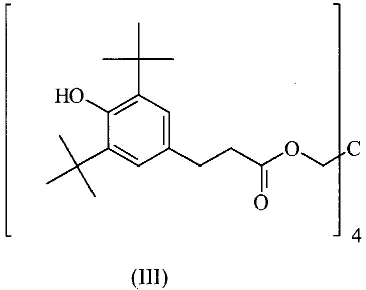

The present automotive interior article and/or the polypropylene composition part of said article may comprise different phenolic antioxidants, as defined in the instant invention, however it is preferred that it comprises only one type of phenolic antioxidant as defined herein.

The automotive interior article and/or the polypropylene composition part of said article can additionally comprise one or more phosphorous antioxidants. More preferably the automotive interior article and/or the polypropylene composition part of said article comprise(s) only one type of phosphorous antioxidant. Preferred phosphorous antioxidants are selected from the group consisting of
tris-(2,4-di-tert-butylphenyl) phosphite (CAS no. 31570-04-4; M 647 g/mol),
tetrakis-(2,4-di-tert-butylphenyl)-4,4'-biphenylen-di-phosphonite (CAS no. 38613-77-3; M 991 g/mol),
bis-(2,4-di-tert-butylphenyl)-pentaerythrityl-di-phosphite (CAS no. 26741-53-7; M 604 g/mol),
di-stearyl- pentacrythrityl-di-phosphite (CAS no. 3806-34-6; M 733 g/mol),
tris-nonylphenyl phosphite (CAS no. 26523-78-4; M 689 g/mol),
bis(2,6-di-tert-butyl-4-methylphenyl)pentaerythrityl-di-phosphite (CAS no. 80693-00-1; M 633 g/mol),
2,2'-methylenebis (4,6-di-tert-butylphenyl) octyl-phosphite (CAS no. 126050-54-2; M 583 g/mol),
1,1,3-tris (2-methyl-4-ditridecyl phosphite-5-tert-butylphenyl) butane (CAS no. 68958-97-4; M 1831 g/mol),
4,4'-butylidenebis (3-methyl-6-tert-butylphenyl-di-tridecyl) phosphite (CAS no. 13003-12-8; M 1240 g/mol),
bis-(2,4-dicumylphenyl)pentaerythritol diposphite (CAS no. 154862-43-8; M 852 g/mol),
bis(2-methyl-4,6-bis(1,1-dimethylethyl) phenyl) phosphorous acid ethylester (CAS no. 145650-60-8; M 514 g/mol),
2,2',2"-nitrilo triethyl-tris(3,3',5,5'-tetra-tert-butyl-1,1'-biphenyl-2,2'-diyl)phosphite) (CAS no. 80410-33-9; M 1465 g/mol)
2,4,6-tris(tert-butyl)phenyl-2-butyl-2-ethyl-1,3-propandiolphosphit (CAS no. 161717-32-4, M 450 g/mol),
2,2'-ethyliden-bis(4,6-di-tert-butylphenyl)fluorphosphonit (CAS no. 118337-09-0; M 487 g/mol),
6-(3-(3-tert-butyl-4-hydroxy-5-methylphenyl)propoxy)-2,4,8,10-tetra-tert-butyldibenz[d,f][1.3.2]dioxaphosphepin (CAS no. 203255-81-6; M 660 g/mol),
tetrakis-(2,4-di-tert-butyl-5-methylphenyl)-4,4'-biphenylen-di-phosphite (CAS no. 147192-62-9; M 1092 g/mol), and
1,3-bis-(diphenylphosphino)-2,2-dimethylpropane (CAS no. 80326-98-3; M 440.5 g/mol).

Especially suitable are organic phosphites, in particular those as defined in the above list, as phosphorous antioxidants.

The most preferred phosphorous antioxidant is tris-(2,4-di-tert-butylphenyl) phosphite (CAS no. 31570-04-4; M 647 g/mol).

As stated above known polymer compositions comprising talc and phenolic antioxidants suffer from a rather quick degradation of the antioxidants. Such quick degradation is caused by the presence of talc and more importantly by the residues within in the talc. These residues may catalyse the degradation of the organic antioxidants. Thus especially in case the automotive interior article and/or the polypropylene composition part of said article for which the inosilicate is used contain(s) small amounts of talc (but also in cases in which the automotive interior article and/or the polypropylene composition part of said article contain(s) no talc), said automotive interior article and/or said polypropylene composition part of said article can contain further additives which may impede the catalytic activity of talc and/or other reinforcing agents in view of the phenolic antioxidants and thus reduces the degradation process and associated therewith minimises the headspace emission and the malodour.

It has been in particular discovered that polyethers are in particular useful. Preferably such polyethers are present in an amount of 100 to 20,000 ppm, more preferably of 100 to 10,000 ppm, yet more preferably of 500 to 5,000 ppm, still more of preferably 500 to 3,000 ppm, still yet more of preferably 800 to 3,000 ppm, in the automotive interior article and/or in the polypropylene composition of said article. Polyethers are generally speaking polymers with more than one ether group. Accordingly polyethers are preferably polyethers with a weight average molecular weight (M_{w}) of at least 300 g/mol, more preferably of at least 700 g/mol. More preferably such polyethers have a weight average molecular weight (M_{w}) of not more than 13,000 g/mol. In one preferred embodiment the polyethers according to this invention have weight average molecular weight (M_{w}) of 300 to 12,000 g/mol, more preferably of 700 to 8,000 g/mol and yet more preferably of 1150 to 8,000 g/mol.

Without be bonded on the theory the polyethers as used in herein are able to bond on the surface of the talc or other reinforcing agents, like the inosilicate(s), and thus form a kind of sheeting surrounding the talc particles or reinforcing agent particles. The bonding may be a covalent bonding and/or ionic bonding. Accordingly the polyethers impede contacting of the phenolic antioxidants with the talc and/or with the reinforcing agents, like the inosilicate. Thus any degradation caused by talc and/or by other reinforcing agents, like the inosilicate(s) is therewith minimized or avoided.

As especially useful polyethylene glycols and/or epoxy resins have been recognized.

In case polyethylene glycols are present in the polymer composition the following are preferred: polyethylene glycol having a weight average molecular weight (M_{w}) of about 4,000 g/mol (CAS-no 25322-68-3), polyethylene glycol having a weight average molecular weight (M_{w}) of about 8,000 g/mol (CAS-no 25322-68-3), polyethylene glycol having a weight average molecular weight (M_{w}) of about 10,000 g/mol (CAS-no 25322-68-3) and/or polyethylene glycol having a weight average molecular weight (M_{w}) of about 20,000 g/mol (CAS-no 25322-68-3). Especially preferred polyethylene glycols are PEG 4000 and/or PEG 10000 of Clariant.

Epoxy resins are in particular appreciated as they comprise reactive epoxy groups simplifying a covalent bonding of the epoxy resin with talc and/or other reinforcing agents, like the inosilicate(s). Accordingly the epoxy resins are tightly bonded on the surface of the talc and/or other reinforcing agents, like the inosilicate(s), and therefore provide an especially suitable protection against degradation of the phenolic antioxidants. Even more preferred the epoxy resins comprise phenyl groups. Such phenyl groups have the additional advantage that they act as scavengers for possible degradation products of the phenolic antioxidants. Without be bonded on the theory it is very likely that the phenyl groups of the epoxy resins will be Friedel-Crafts alkylated. Typically the alkylating groups originate from the phenolic antioxidants. One example is 2-methyl-1-propene, a typical degradation product of hindered phenolic antioxidants as defined above. Accordingly it is preferred that the automotive interior article and/or the polypropylene composition part of said article for which the inosilicate used comprise(s) epoxy resins comprising units derived from a monomer of the formula (IV) 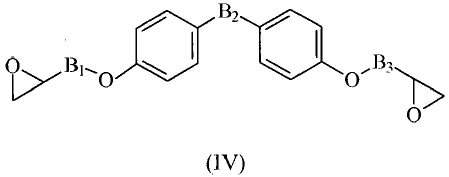 wherein
B₁ and B₃ are independently selected from the group consisting of -(CH₂)-, -(CH₂)₂-,-(CH₂)₃-, -(CH₂)₄-, and -(CH₂)₅-, preferably B, and B₃ are -(CH₂)-, and B₂ is selected from the group consisting of -((CH₃)₂C)-, -((CH₃)₂C)₂-, -((CH₃)₂C)₃-, -CH₂-((CH₃)₂C)-, -((CH₃)₂C)-CH₂, -CH₂-((CH₃)₂C)-CH₂- and -CH₂-((CH₃)₂C)₂-CH₂-, preferably B₂ is -((CH₃)₂C)-. Thus it is appreciated that the epoxy resins comprises units derived from a monomer of the formula (IV-a)

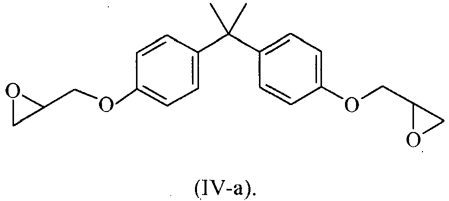

Further it is preferred that the epoxy resins comprises not only units derived from a monomer of the formula (IV) or (IV-a) but additionally units derived from a monomer of the formula (V) 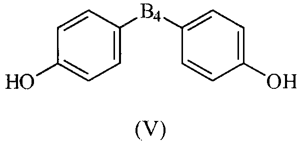 wherein
B₄ is selected from the group consisting of -((CH₃)₂C)-, -((CH₃)₂C₂)₂-, -((CH₃)₂C)₃-, -CH₂-((CH₃)₂C)-, -((CH₃)₂C)-CH₂, -CH₂((CH₃)₂C)-CH₂- and -CH₂-((CH₃)₂C)₂-CH₂-. Especially preferred are monomers of formula (V), wherein B₄ is -((CH₃)₂C)-.

Accordingly the epoxy resins have preferably the formula (VI) 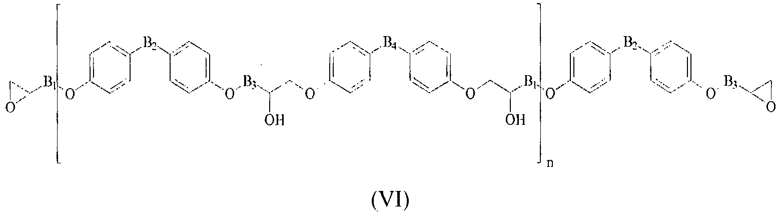 wherein
B₁ and B₃ are independently selected from the group consisting of -(CH₂)-, -(CH₂)₂-,-(CH₂)₃-, -(CH₂)₄-, and -(CH₂)₅-,
B₂ and B₄ are independently selected from the group consisting of -((CH₃)₂C)-, -((CH₃)₂C)₂-, -((CH₃)₂C)₃-, -CH₂-((CH₃)₂C)-, -((CH₃)₂C)-CH₂, -CH₂-((CH₃)₂C)-CH₂- and -CH₂-((CH₃)₂C)₂-CH₂-, and
n is from 1 to 20.

Additionally it is preferred that the epoxy resins have an epoxy index in the range of 1.10 to 2.00 Eq/kg, more preferably 1.12 to 1.60 Eq/kg, wherein the epoxy index corresponds to the number of epoxy functions in respect of 100 g of resin.

The most preferred epoxy resin is poly (2,2-bis[4-(2,3-epoxypropoxy]-phenyl] propane-co-(2-chloromethyl oxirane) (CAS-no 25036-25-3), in particular with an epoxy index as defined in the previous paragraph.

Additionally or alternatively to the polyethers as defined above the automotive interior article and/or the polypropylene composition part of said article for which the inosilicate(s) is/are used may contain carbonyl compounds, like carboxylic acids, carboxylic acid amides and/or carboxylic acid esters. Such carbonly compounds achieve the same effect as the polyethers, namely to form a kind of sheeting surrounding the talc particles and/or the reinforcing agents. Preferably such carbonyl compounds are present in an amount of 100 to 8,000 ppm, more preferably of 500 to 5,000 ppm, yet more preferably of 500 to 3,000 ppm, still more of preferably 800 to 3,000 ppm, in the automotive interior article and/or in the polypropylene composition of said article.

As especially useful aromatic carboxylic acids, fatty acid amides and fatty acid esters have been recognized.

In case the polymer composition comprises carboxylic acids the benzoic acid is most Preferred.

In case the automotive interior article and/or the polypropylene composition part of said article comprise(s) carboxylic acid amides it is preferred that the carboxylic acid amides have C10 to C25 carbon atoms, more preferably C16 to C24 carbon atoms. Even more preferred the carboxylic acid amides are fatty acid amides having C10 to C25 atoms, like C16 to C24 carbon atoms. Particularly the carboxylic acid amides are unsaturated. Thus unsaturated fatty acid amides, like unsaturated fatty acid amides having C10 to C25 atoms, like C16 to C24 carbon atoms, are especially appreciated. Accordingly the carboxylic acid amides are preferably selected from the group consisting of 13-docosenamide (CAS no. 112-84-5), 9-octadecenamide (CAS no. 301-02-0), stearamide (CAS no. 124-26-5) and behenamide (CAS no. 3061-75-4). The most preferred carboxylic acid amide is 13-docosenamide (CAS no. 112-84-5).

In case the polymer composition comprises carboxylic acid ester, like fatty acid ester, it is appreciated that the carboxylic acid esters are glycerol esters of the formula (VII) 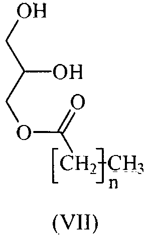 wherein
n is 5 to 25, preferably 10 to 18.

Alternatively the carboxylic acid esters can be glycerol esters of the formula (VIII-a) or (VIII-b) 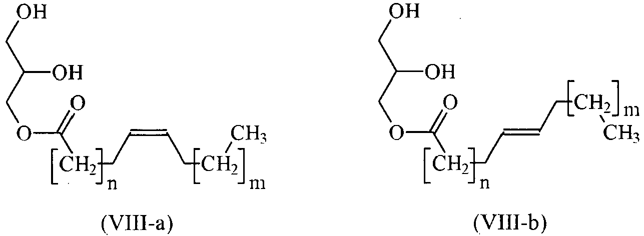 wherein
n and m are independently 1 to 9, preferably 4 to 8. More preferably n and m are identically.

Accordingly the carboxylic acid esters are preferably selected from the group consisting of glycerol monostearate, glycerol monolaurate and 1,3-dihydroxypropan-2-yl (Z)-octadec-9-enoate.

As further additives the inventive automotive interior article and/or the polypropylene composition part of said article preferably comprise(s) at least one hindered amine light stabilizer. Accordingly such hindered amine light stabilizers (HALS) are present in an amount of 800 to 2,500 ppm, more preferably of 900 to 2,000 ppm, yet more preferably of 1,200 to 1,600 ppm, in the automotive interior article and/or in the polypropylene composition of said article.

Hindered amine light stabilizers (HALS) are known in the art. Preferably such hindered amine light stabilizers (HALS) are 2,6-alkyl-piperidine derivatives in particular 2,2,6,6-tetramethyl-piperidine derivatives. Especially suitable are hindered amine light stabilizers (HALS) of the formula (IX) 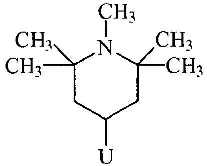 wherein U constitutes the remaining part of the hindered amine light stabilizer (HALS).

The hindered amine light stabilizers (HALS) do not absorb UV radiation, but act to inhibit degradation of the polypropylene. They slow down the photochemically initiated degradation reactions, to some extent in a similar way to antioxidants.

The hindered amine light stabilizers (HALS) show a high efficiency and longevity due to a cyclic process wherein the hindered amine light stabilizers (HALS) are regenerated rather than consumed during the stabilization process. Accordingly, one advantage of the hindered amine light stabilizers (HALS) is that significant levels of stabilization are achieved at relatively low concentrations.

Accordingly the hindered amine light stabilizer(s) (HALS) is(are) preferably selected from the group consisting of
bis-(2,2,6,6-tetramethyl-4-piperidyl) sebacate (CAS no. 52829-07-9; M_{w} 481 g/mol),
bis-(1,2,2,6,6-pentamethyl-4-piperidyl) sebacate (CAS no. 41556-26-7; M_{w} 509 g/mol),
tetrakis (2,2,6,6-tetramethyl-4-piperidyl)-1,2,3,4-butane tetracarboxylate (CAS no. 64022-61-3; M_{w} 792 g/mol),
tetrakis (1,2,2,6,6-pentamethyl-4-piperidyl)-1,2,3,4-butane tetracarboxylate (CAS no. 91788-83-9; M_{w} 847 g/mol),
1,2,3-tris (1,2,2,6,6-pentamethyl-4-piperidyl)-4-tridecyl butane-1,2,3,4-tetracarboxylate (CAS no. 84696-72-0; M_{w} ca. 900 g/mol),
1,2,3-tris (2,2,6,6-tetramethyl-4-piperidyl)-4-tridecyl butane-1,2,3,4-tetracarboxylate (CAS no. 84696-71-9; M_{w} ca. 900 g/mol),
2,2,4,4-tetramethyl-7-oxa-3,20-diaza-dispiro(5.1.11.2)-heneicosane-21-on (CAS no. 64338-16-5; M_{w} 364 g/mol),
di-(1,2,2,6,6-pentamethylpiperidin-4-yl) p-methoxybenzylidenemalonate (CAS no. 147783-69-5; M_{w} 528 g/mol),
N,N'-bisformyl-N,N'-bis-(2,2,6,6-tetramethyl-4-piperidinyl)-hexamethylendiamine (CAS no. 124172-53-8; M_{w} 450 g/mol),
dimethyl succinate polymer with 4-hydroxy-2,2,6,6-tetramethyl-1-piperidin ethanol (CAS no. 65447-77-0; M_{w} >2500 g/mol),
poly((6-((1,1,3,3-tetramethylbutyl)amino)-1,3,5-triazin-2,4-diyl)-(2,2,6,6-tetramethyl-4-piperidyl)imino)-hexamethylen-((2,2,6,6-tetramethyl-4-piperidyl)imino)) (CAS no. 71878-19-8; M_{w} >2500 g/mol),
1,3,5-triazine-2,4,6-triamine, N₅N"'-1,2-ethanediylbis[N-[3-[[4,6-bis[butyl(1,2,2,6,6-pentamethyl-4-piperidinyl)amino]-1,3,5-triazin-2-yl]amino]propyl]-N',N"-dibutyl-N',N"-bis(1,2,2,6,6-pentamethyl-4-piperidinyl)- (CAS no. 106990-43-6; M_{w} 2286 g/mol),
bis-(1-octyloxy-2,2,6,6-tetramethyl-4-piperidinyl) sebacate (CAS no. 129757-67-1; M_{w} 737 g/mol),
1,6-hexanediamine, N,N'-bis(2,2,6,6-tetramethyl-4-piperidinyl)-polymer with 2,4,6-trichloro-1,3,5-triazine, reaction products with N-butyl-1-butanamine and N-butyl-2,2,6,6-tetramethyl-4-piperidinamine (CAS no. 192268-64-7; M_{w} 2600 - 3400 g/mol),
bis(1,2,2,6,6-pentamethyl-4-piperidinyl)-(3,5-bis(1,1-dimethylethyl)-4-hydroxyphenylmethyl) propandioate (CAS no. 63843-89-0; M_{w} 685 g/mol),
2,9,11,13,15,22,24,26,27,28,-decaazatricyclo(21.3.1.110.14)octacosa-1(27),10,12,14(28),23,25-hexaene-12,25-diamine, N,N'-bis(1,1,3,3-tetramethylbutyl)-2,9,15,22-tetrakis(2,2,6,6-tetramethyl-4-piperidinyl) (CAS no. 86168-95-8; M_{w} > 320 g/mol),
poly((6-morpholino-s-triazine-2,4-diyl)(2,2,6,6-tetramethyl-4-piperidyl)imino)hexamethylene(2,2,6,6-tetramethyl-4-piperidyl)imino)) (CAS no 82451-48-7, M_{w} 1600 g/mol),
poly((6-morpholino-s-triazine-2,4-diyl)(2,2,6,6-tetramethyl-4-piperidyl)imino)hexamethylene(1,2,2,6,6-pentamethyl-4-piperidyl)imino)) (CAS no 193098-40-7; M_{w} ca. 1700 g/mol),
polymer of 2,2,4,4-tetxamethyl-7-oxa-3,20-diaza-20-(2,3-epoxi-propyl)-dispiro-(5.1.11.2)-heneicosane-21-one and epichlorohydrin (CAS no. 292483-55-4; M_{w} ca. 1500 g/mol),
1,3-propanediamine, N,N" -1,2-ethanediylbis-,polymer with 2,4,6-trichloro-1,3,5-triazine,
reaction products with N-butyl-2,2,6,6-tetramethyl-4-piperidinamine (CAS no. 136504-96-6; M_{w} ca. 3000 g/mol),
1,2,3,4-butanetetracarboxylic acid, polymer with beta, beta, beta', beta'-tetramethyl-2,4,8,10-tetraoxospiro(5.5) undecane-3,9-diethanol, 1,2,2,6,6-pentamethyl-4-piperidinyl ester (CAS no. 101357-36-2; M_{w} ca. 2000 g/mol)
2,4,8,10-tetraoxospiro(5.5) undecane-3,9-diethanol, beta, beta, beta', beta'-tetramethyl-,
polymer with 1,2,3,4-butanetetracarboxylic acid, 2,2,6,6-tetramethyl-4-piperidinyl ester (CAS no. 101357-37-3, M_{w} ca. 1900 g/mol)
polymethylpropyl-3-oxy-4(2,2,6,6-tetramethyl)piperidinyl)siloxane (CAS no 182635-99-0) N(2,2,6,6-tetramethyl-4-piperidyl)-maleinimid, C₂₀ : C₂₄ -olefin-copolymer (CAS no. 152261-33-1; M_{w} ca. 3500 g/mol), and
4-(3-(3,5-di-t-butyl-4-hydroxyphenyl)propionyloxy)-1-(2-(3-(3,5-di-t-butyl-4-hydroxy)propionyloxy)ethyl)-)-2,2,6,6-tetramethylpiperidine (CAS no. 73754-27-5; M_{w} 772 g/mol)
Especially preferred the hindered amine light stabilizer(s) (B) is(are) selected from the group consisting of
bis-(2,2,6,6-tetramethyl-4-piperidyl) sebacate (CAS no. 52829-07-9; M_{w} 481 g/mol),
bis-(1,2,2,6,6-pentamethyl-4-piperidyl) sebacate (CAS no. 41556-26-7; M_{w} 509 g/mol),
tetrakis (2,2,6,6-tetramethyl-4-piperidyl)-1,2,3,4-butane tetracarboxylate (CAS no. 64022-61-3; M_{w} 792 g/mol),
tetrakis (1,2,2,6,6-pentamethyl-4-piperidyl)-1,2,3,4-butane tetracarboxylate (CAS no. 91788-83-9; M_{w} 847 g/mol),
1,2,3-tris (1,2,2,6,6-pentamethyl-4-piperidyl)-4-tridecyl butane-1,2,3,4-tetracarboxylate (CAS no. 84696-72-0; M_{w} ca. 900 g/mol),
1,2,3-tris (2,2,6,6-tetramethyl-4-piperidyl)-4-tridecyl butane-1,2,3,4-tetracarboxylate (CAS no. 84696-71-9; M_{w} ca. 900 g/mol),
N,N'-bisformyl-N,N'-bis-(2,2,6,6-tetramethyl-4-piperidinyl)-hexamethylendiamine (CAS no. 124172-53-8; M_{w} 450 g/mol),
1,3,5-triazine-2,4,6-triamine, N₅N"'-1,2-ethanediylbis[N-[3-[[4,6-bis[butyl(1,2,2,6,6-pentamethyl-4-piperidinyl)amino]-1,3,5-triazin-2-yl]amino]propyl]-N',N"-dibutyl-N',N"-bis(1,2,2,6,6-pentamethyl-4-piperidinyl)- (CAS no. 106990-43-6; M_{w} 2286 g/mol), and
bis-(1-octyloxy-2,2,6,6-tetramethyl-4-piperidinyl) sebacate (CAS no. 129757-67-1; M_{w} 737 g/mol).

The most preferred hindered amine light stabilizer(s) (HALS) is(are) 1,3,5-triazine-2,4,6-triamine, N₅N"'-1,2-ethanediylbis[N-[3-[[4,6-bis[butyl(1,2,2,6,6-pentamethyl-4-piperidinyl)amino]-1,3,5-triazin-2-yl]amino]propyl]-N',N"-dibutyl-N',N"-bis(1,2,2,6,6-pentamethyl-4-piperidinyl)- (CAS no. 106990-43-6; M_{w} 2286 g/mol) of formula (X) 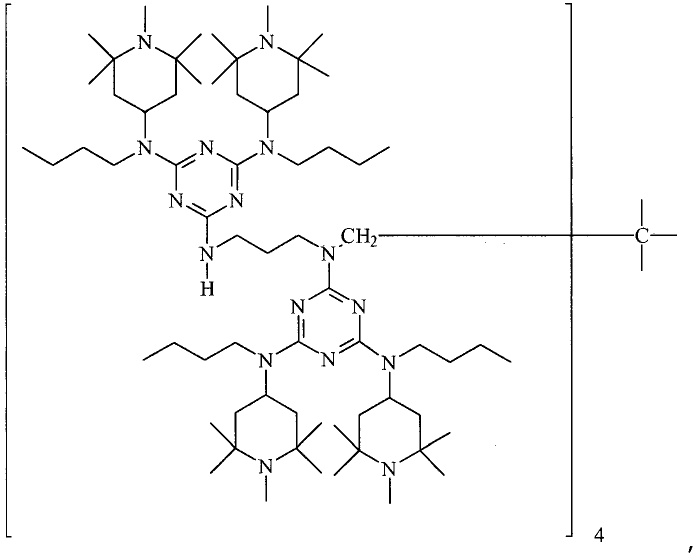 poly((6-((1,1,3,3-tetramethylbutyl)amino)-1,3,5-triazin-2,4-diyl)-(2,2,6,6-tetramethyl-4-piperidyl)imino)-hexamethylen-((2,2,6,6-tetramethyl-4-piperidyl)imino)) (CAS no. 71878-19-8; M_{w} >2500 g/mol), and
bis-(2,2,6,6-tetramethyl-4-piperidyl) sebacate (CAS no. 52829-07-9; M_{w} 481 g/mol) of formula (XI)

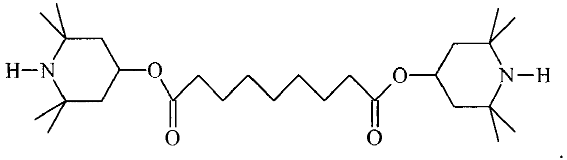

It has been further discovered that especially good results are achievable in case the hindered amine stabilizers (HALS) have a rather high molecular weight, i.e. a M_{w} higher than 1000 g/mol, more preferably higher than 2000 g/mol. Accordingly hindered amine stabilizers (HALS) of the above mentioned list with a M_{w}, higher than 1000 g/mol, more preferably higher than 2000 g/mol are especially preferred. Thus 1,3,5-triazine-2,4,6-triamine, N₅N"'-1,2-ethanediylbis[N-[3-[[4,6-bis[butyl(1,2,2,6,6-pentamethyl-4-piperidinyl)amino]-1,3,5-triazin-2-yl]amino]propyl]-N',N"-dibutyl-N',N"-bis(1,2,2,6,6-pentamethyl-4-piperidinyl)-(CAS no. 106990-43-6; M_{w} 2286 g/mol) of formula (X) and poly((6-((1,1,3,3-tetramethylbutyl)amino)-1,3,5-triazin-2,4-diyl)-(2,2,6,6-tetramethyl-4-piperidyl)imino)-hexamethylen-((2,2,6,6-tetramethyl-4-piperidyl)imino)) (CAS no. 71878-19-8; M_{w} >2500 g/mol) are especially suitable as hindered amine light stabilizers (HALS).

As stated above the inventive automotive interior article and/or the polypropylene composition part of said article comprise(s) at least one hindered amine light stabilizer (HALS) as defined above. Preferably however the present invention comprises one or two different hindered amine light stabilizers (HALS).

Additionally it is appreciated that the inventive automotive interior article and/or the polypropylene composition part of said article comprise(s) at least one slip agent being a fatty acid amide. Accordingly such slip agents are present in an amount of 1,000 to 2,000 ppm, and more preferably of 1,200 to 1,600 ppm, in the automotive interior article and/or in the polypropylene composition of said article. More preferably the inventive automotive interior article and/or the polypropylene composition part of said article comprise(s) only one slip agent. Preferred types of slip agents are unsaturated fatty acid amides. The amount of carbons of the fatty acids is preferably in the range of C 10 to C25 carbon atoms.

Accordingly the slip agent(s) is(are) preferably selected from the group consisting of
cis-13-docosenoic amide (CAS no. 112-84-5; M_{w} 337.6 g/mol),
cis-9,10 octadecenoamide (CAS no. 301-02-0; M_{w} 281.5 g/mol)
octadecanoylamide (CAS no. 124-26-5; M_{w} 283.5 g/mol),
behenamide (CAS no. 3061-75-4; M_{w} 339.5 g/mol),
N,N'-ethylene-bis-stearamide (CAS no. 110-30-5; M_{w} 588 g/mol),
N-octadecyl-13-docosenamide (CAS no. 10094-45-8; M_{w} 590 g/mol), and
oleylpalmitamide (CAS no. 16260-09-6; M_{w} 503 g/mol)

Especially suitable is(are) cis-13-docosenoic amide (CAS no. 112-84-5; M_{w} 337.6 g/mol) and/or cis-9,10 octadecenoamide (CAS no. 301-02-0; M_{w} 281.5 g/mol).

Considering the above given information the present invention is directed to an automotive interior article comprising at least 50 wt.-%, more preferably at least 70 wt.-%, more preferably at least 90 wt.-%, yet more preferably 99.0 wt.-%, like 100 wt.-%, based on said article of a polypropylene composition having a melt flow rate MFR₂ (230 °C) measured according to ISO 1133 of 2.0 to 80.0 g/10min, preferably of 5.0 to 50.0 g/10min, more preferably 7.0 to 30.0 g/10min, said polypropylene composition comprises
(a) at least 25.0 wt.-%, more preferably at least 30.0 wt.-%, yet more preferably 25.0 to 45.0 wt.-%, like 30.0 to 40.0 wt.-%, of the heterophasic polypropylene (H-PP1),
(b) at least 25.0 wt.-%, more preferably at least 30.0 wt.-%, yet more preferably 25.0 to 45.0 wt.-%, like 30.0 to 40.0 wt.-%, of the heterophasic polypropylene (H-PP2),
(c) at least 3.0 wt.-%, more preferably at least 5.0 wt.-%, still more preferably 5.0 15.0 wt.-%, like 8.0 to 12.0 wt.-%, of the high density polyethylene (HDPE),
(d) 10,000 to 550,000 ppm, preferably 50,000 to 500,000 ppm, more preferably 100,000 to 400,000 ppm, yet more preferably 150,000 to 300,000 ppm, inosilicate(s), like Wollastonite (Ca₃[Si₃O₉]),

The polypropylene composition with the reduced amount of volatiles is preferably obtained by extruding the polymer components and thereby adding the additives as mentioned in the instant invention. Preferably a twin-screw extruder is used, like the twin-screw extruder ZSK40, and subsequently formed, preferably by injection molding, into the desired automotive interior article. The polymer composition pelletized with the twin-screw extruder ZSK 40 is used in the headspace emission test according to VDA 277 and in the sensory impression of smell method according to PV 3900.

The present invention is further directed to the use of an inosilicate as defined in the instant invention in an automotive interior article (as defined herein) to accomplish a sensory impression of smell measured according to PV 3900 to below 4.0.

The present invention is further described by way of examples.

### EXAMPLES

The following definitions of terms and determination of methods apply for the above general description of the invention as well as to the below examples unless otherwise defined.

### Molecular weights, molecular weight distribution (Mn, Mw, MWD)

Mw/Mn/MWD are measured by Gel Permeation Chromatography (GPC) according to the following method:

The weight average molecular weight Mw and the molecular weight distribution (MWD = Mw/Mn wherein Mn is the number average molecular weight and Mw is the weight average molecular weight) is measured by a method based on ISO 16014-1:2003 and ISO 16014-4:2003. A Waters Alliance GPCV 2000 instrument, equipped with refractive index detector and online viscosimeter was used with 3 x TSK-gel columns (GMHXL-HT) from TosoHaas and 1,2,4-trichlorobenzene (TCB, stabilized with 200 mg/L 2,6-Di tert butyl-4-methylphenol) as solvent at 145 °C and at a constant flow rate of 1 mL/min. 216.5 µL of sample solution were injected per analysis. The column set was calibrated using relative calibration with 19 narrow MWD polystyrene (PS) standards in the range of 0.5 kg/mol to 11 500 kg/mol and a set of well characterised broad polypropylene standards. All samples were prepared by dissolving 5 - 10 mg of polymer in 10 mL (at 160°C) of stabilized TCB (same as mobile phase) and keeping for 3 hours with continuous shaking prior sampling in into the GPC instrument.

**MFR₂ (230 °C)** is measured according to ISO 1133 (230 °C, 2.16 kg load).

**MFR₂ (190 °C)** is measured according to ISO 1133 (190 °C, 2.16 kg load).

**Ethylene content** is measured with Fourier transform infrared spectroscopy (FTIR) calibrated with ¹³C-NMR. When measuring the ethylene content in polypropylene, a thin film of the sample (thickness about 250 µm was prepared by hot-pressing. The area of absorption peaks 720 and 733 cm⁻¹ was measured with Perkin Elmer FTIR 1600 spectrometer. The method was calibrated by ethylene content data measured by ¹³C-NMR.

**Particle size** is measured according to ISO 13320-1:1999

**The xylene cold solubles (XCS, wt.-%):** Content of Xylene cold solubles (XCS) is determined at 23 °C according ISO 6427.

**Tensile Modulus** is evaluated according to ISO 527-1 (cross head speed = 1 mm/min; 23 °C) using injection molded specimens as described in EN ISO 294-1 (multipurpose test specimen as described in ISO 527-2,).

**VDA 277 (available for instance from "Dokumentation Kraftfahrwesen (DKF);**

**Ulrichstraße 14, 74321 Bietigheim Bissingen)**

The content of volatiles is determined according to VDA 277:1995 using a gas chromatography (GC) device with a WCOT-capillary column (wax type) of 0.25 mm inner diameter and 30 m length. The GC settings were as follows: 3 minutes isothermal at 50 °C, heat up to 200 °C at 12 K/min, 4 minutes isothermal at 200 °C, injection-temperature: 200 °C, detection-temperature: 250 °C, carrier helium, flow-mode split 1:20 and average carrier-speed 22 - 27 cm/s.

In addition to the FID detector for the summary volatile evaluation a MS detector is used for the evaluation of the single volatile components. A specific Quadropol MS was used with the following settings: 280 °C transfer-line temperature, scan method with scanning rate of 15 - 600 amu, relative EMV mode, mass calibration with standard spectra autotune, MS source temperature of 230 °C and MS Quad temperature of 150 °C.

**VDA 270-Method for to detect the sensory impression of smell** (available for instance from "Dokumentation Kraftfahrwesen (DKF); Ulrichstraße 14, 74321 Bietigheim Bissingen)

### Testing sets

a) heat chamber with air circulation according to DIN 50 011-12; accuracy class 2
b) 1 or 3 litre glass testing cup with unscented sealing and lid; the cup, the sealing and the lid have to be cleaned before use.

**Table 1: Specimen**

| **Variant** | **Examples** | **Sample quantity for 1 litre cup** | **Sample quantity for 3 litre cup** |
|---|---|---|---|
| A | Clips, plug, other small parts | 10 +/-1 g | 30 +/-3 g |
| B | Arm rest, ash tray, handhold, sunshade and other medium sized parts | 20 +/-2 g | 60 +/-6 g |
| C | Insulating material, foils, leather, cover fabric, celluar material, like foam, carpets and other large-scale parts | 50 +/-5 g | 150 +/-15 g |

In case of variant C the material thickness is less than 3 mm, in the 1-litre testing cup a specimen of 200+/- 20 cm² is used whereas in the 3-litre testing cup a specimen of 600+/-60 cm² is used. In case the material thickness is more than 20 mm, the specimen used must be trimmed to a size of below 20 mm. Sandwich-assemblies are tested as a whole. In case of small parts, several specimens have to be used to obtain the desired amount to be tested.

### Procedure

Three different storage conditions are available (table 2). In the present application variant 3 has been used.

**Table 2: Storage conditions**

| **Variant** | **Temperature** | **Storage period** | **Note** |
|---|---|---|---|
| 1 | 23+/-2 °C | 24+/- h | a, b, c, d, f |
| 2 | 40+/-2 °C | 24+/- h | a, b, c, d, f |
| 3 | 80+/-2 °C | 2 h +/- 10min | a, c, e, f |

| | | | |
|---|---|---|---|
| a) for variants 1 and 2 50 ml deionized water is added to the 1-litre testing cup and 150 ml deionized water is added to the 3-litre testing cup b) the specimen(s) is/are placed in a manner avoiding direct contact with water c) the testing cup is tightly closed stored in the preheated heat chamber d) for variants 1 and 2 the testing takes place immediately after removal of the testing cup from the heat chamber. c) for variant 3 the testing cup must be cooled down to a temperature of 60+/-5 °C after removal from the heat chamber before being tested; after testing by three testers the testing cup must be stored for 30 minutes at 80-/-2 °C in the heat chamber before further testing is carried out f) the rating must be carried out by at least three testers; differ the individual ratings of the testers in the grading by two points, a repetition of the testing by at least five testers must follow | | | |

### Analysis

The rating of smell for all variants is accomplished by the scale as given in table 3. Grades are given from 1 to 6, whereby half grades are possible.

**Table 3: Rating of smell**

| **Grade** | **Rating** |
|---|---|
| 1 | not noticeable |
| 2 | noticeable; undisturbing |
| 3 | clearly noticeable; but not yet disturbing |
| 4 | disturbing |
| 5 | severely disturbing |
| 6 | intolerable |

The result is given as an average value, rounded by half grades. The used variant is indicated with the result.

In the present application variant C/3 has been used (see tables 1 and 2)

### Preparation of examples

**Table 4: Properties of the examples (heterophasic polypropylene)**

| | | **CE 1** | **IE 1** |
|---|---|---|---|
| H-PP1 | [wt%] | 25 | 35 |
| H-PP2 | [wt%] | 40 | 33 |
| HDPE | [wt%] | 10 | 10 |
| Talc | [wt%] | 20 | |
| Wollastonite | [wt%] | | 17 |
| AO 1 | [wt%] | 0.20 | 0.20 |
| AO 2 | [wt%] | 0.10 | 0.10 |
| HALS 1 | [wt%] | 0.09 | 0.09 |
| HALS 2 | [wt%] | 0.09 | 0.09 |
| SA 1 | [wt%] | 0.20 | 0.20 |
| CMB 1049 | [wt%] | 4 | 4 |
| Imat Tester 1 | | 4 | 3 |
| Imat Tester 2 | | 5.5 | 4 |
| Imat Tester 3 | | 5 | 3.5 |
| Imat Tester 4 | | 4 | 3 |
| Odour IMAT 1 | [1-6] | 4.6 | 3.4 |
| MFR | [g/10min] | 12.4 | 13 |
| Tensile Modulus | [MPa] | 2291.7 | 2497.9 |
| Tensile Stress @ yield | [MPa] | 24.8 | 23.5 |
| Tensile Strain @ yield | [%] | 4.9 | 5 |
| Tensile Stress @ break | [MPa] | 10.5 | 9.6 |
| Tensile Strain @ break | [%] | 28.39 | 26.21 |

| | | | |
|---|---|---|---|
| IE 1 has a total volatile content according to VDA 277 of 20 µgC/g and a 2-methyl-1-propene content according to VDA 277 of below 1.0 µgC/g. **H-PP1** is the commercial product EF015AE of Borealis AG having melt flow rate MFR₂ (230 °C) of 18 g/10min, a XCS of 29 wt.-%, and an ethylene content (C2) of 20 wt **H-PP2** is the commercial product BE677MO of Borealis AG having melt flow rate MFR₂ (230°C)) of 14 g/10min, a XCS of 14 wt.-%, and an ethylene content (C2) of 7.5 wt **HDPE** is the commercial product MG9641 of Borealis having melt flow rate MFR₂ (190 °C) of 8 g/10min (ISO 1133) and a density 964 kg/m³ (ISO 1183) **Talc** the commercial talc Jetfine 3CA of Luzenac Europe. France **Wollastonite** the commercial Wollastonite "NYGLOS 8" of NYCO **AO 1** phenolic antioxidant. namely pentaerythrityl-tetrakis(3-(3'.5'-di-tert. butyl-4-hydroxyphenyl)-propionate (CAS no 6683-19-8) [IRGANOX 1010 of Ciba] **AO 2** phosphorous antioxidant. namely Tris (2.4-di-t-butylphenyl) phosphite (CAS-no 31570-04-4) [Irgafos 168 of Ciba] **HALS 1** hindered amine light stabilizer. namely bis-(2.2.6.6-tetramethyl-4-piperidyl)-sebacate (CAS-no 52829-07-9) [Tinuvin 770 of Ciba] **HALS 2** hindered amine light stabilizer, namely 1.3.5-triazine-2.4.6-triamine. N.N"'-(1.2-ethane-diylbis(((4.6-bis(butyl(1.2.2.6.6-pentamethyl-4-piperidinyl)amino)-1.3.5-triazine-2-yl)imino)-3.1-propanediyl))-bis-(N'.N"-dibutyl-N'.N"-bis-(1.2.2.6.6-pentamethyl-4-piperidinyl) (CAS-no 106990-43-6) [Chimassorb 119 of Ciba] **SA 1** slip agent, namely oleamide (CAS-no 301-02-0) [Atmer SA 1758 FD of Croda Polymers] **CMB 1049** is a blended beige colour masterbatch consisting of 20 wt.-% BD310MO (heterophasic polypropylene having a MFR₂ (230 °C) of 8 g/10min and a XCS of 12 wt.-% of Borealis), 58.6 wt.-% Plaswite LL 7014 (white-masterbatch with TiO₂ from Cabot, Belgium), 20.3 wt.-% Lifocolor Braun APE 60 (masterbatch from Lifocolor, Germany), 0.5 wt.-% Remafin Braun FRAE 30 (Clariant, Germany) and 0.5 wt.-% Plasblak PE 4103 (Carcon Black masterbatch from Cabot, Belgium); components are mixed in a co-rotating twin screw extruder at 200 to 220°C resulting in an overall MFR₂ (230 °C) of 20 g/10min | | | |

## Claims

1. Automotive interior article comprising at least 50 wt.-% based on said article of a polypropylene composition having a melt flow rate MFR₂ (230 °C) measured according to ISO 1133 of 2.0 to 80.0 g/10min, said polypropylene composition comprises as polymer components only a heterophasic polypropylene (H-PP1), a heterophasic polypropylene (H-PP2), and a high density polyethylene (HDPE), wherein said polypropylene composition comprises
(a) at least 25 wt.-% of the heterophasic polypropylene (H-PP1),
(b) at least 25 wt.-% of the heterophasic polypropylene (H-PP2).
(c) at least 3 wit.-% of the high density polyethylene (HDPE),
(d) 10,000 to 550,000 ppm inosilicate,
(e) 100 to 5,000 ppm of phenolic antioxidants, and
(f) optionally 100 to 5,000 ppm of phosphorous antioxidants based on the polymer composition,
and further wherein
(g) said heterophasic polypropylene (H-PP1)
(g1) comprises a polypropylene matrix being a propylene homopolymer and an elastomeric copolymer, said elastomeric copolymer comprises units from
• propylene and
• ethylene and/or C4 to C20 α-olefin
(g2) has comonomer content of 8 to 30 wt.-% based on said heterophasic polypropylene (H-PP1), said comonomer is ethylene and/or at least one C4 to C20 α-olefin, and
(g3) has a xylene cold soluble (XCS) content measured according to ISO 6427 of 15.0 to 40.0 wt.-%, based on the heterophasic polypropylene (H-PP1),
(h) said heterophasic polypropylene (H-PP2)
(h1) comprises a polypropylene matrix being a propylene homopolymer and an elastomeric copolymer, said elastomeric copolymer comprises units from
• propylene and
• ethylene and/or C4 to C20 α-olefin
(h2) has comonomer content of 1.0 to 20.0 wt.-% based on said heterophasic polypropylene (H-PP2), said comonomer is ethylene and/or at least one C4 to C20 α-olefin, and
(h3) has a xylene cold soluble (XCS) content measured according to ISO 6427 of 5.0 to 30.0 wt.-%, based on the heterophasic polypropylene (H-PP2), and
(h4) optionally a melt flow rate MPR₂ (230 °C) in the range of 10.0 to 40.0 g/10min,
and
(i) said heterophasic polypropylene (H-PP2) differs from the heterophasic polypropylene (H-PP1) in the xylene cold soluble (XCS) content.

2. Automotive interior article according to claim 1, wherein the inosilicate is a single chain inosilicate.

3. Automotive interior article according to claim 1 or 2, wherein the inosilicate is from the pyroxenoid group.

4. Automotive interior article according to any one of the preceding claims, wherein the inosilicate is Wollastonite (Ca₃[Si₃O₉]).

5. Automotive interior article according to any one of the preceding claims, wherein the article does not comprise talc.

6. Automotive interior article according to any one of the preceding claims, wherein the polypropylene composition comprises 5 to 15 wt.% of the high density polyethylene (HDPE) based on the polypropylene composition.

7. Automotive interior article according to any one of the preceding claims, wherein the phenolic antioxidant(s) is/are (a) sterically hindered phenolic antioxidant(s).

8. Automotive interior article according to any one of the preceding claims, wherein the phenolic antioxidant(s) comprise(s) at least one residue of formula (II) 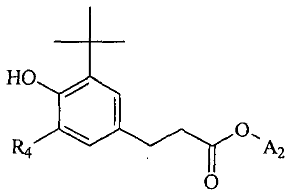 wherein
R₄ is (CH₃)₃C-, CH₃-, or H, preferably (CH₃)₃C-, and
A₂ constitutes the remaining part of the phenolic antioxidant(s).

9. Automotive interior article according to any one of the preceding claims, wherein the polypropylene composition comprises additionally
(a) 1000 to 2500 ppm of hindered amine light stabilizer(s) and/or
(b) 1000 to 2000 ppm of slip agent(s) (C) being a fatty acid amide(s).

10. Automotive interior article according to any one of the preceding claims, wherein the polypropylene composition comprises additionally
(a) 100 to 5,000 ppm polyethers having a weight average molecular weight (M_{w}) of more than 300 g/mol, and/or
(b) 100 to 8,000 ppm carbonyl compounds selected from the group consisting of carboxylic acid, carboxylic acid amide and carboxylic acid ester.

11. Automotive interior article according to any one of the preceding claims, wherein the article has a headspace emission measured according to VDA 277
(a) of all volatiles together of said polymer composition of equal or below 120 µgC/g and/or
(b) of 2-methyl-1-propene of said polymer composition of not more than 70 µgC/g.

12. Use of an inosilicate in an automotive interior article according to any one of the preceding claims, to accomplish a sensory impression of smell measured according to VDA 270 to below 4.0.

## Patentansprüche

1. Kraftfahrzeug-Innengegenstand, enthaltend wenigstens 50 Gew.-%, basierend auf dem Gegenstand, einer Polymer-Zusammensetzung mit einem gemäß ISO 1133 gemessenen Schmelzindex MFR₂ (230 °C) von 2.0 bis 80.0 g/10min, wobei die Polymer-Zusammensetzung als Polymer-Komponenten nur ein heterophasisches Polypropylen (H-PP1), ein heterophasisches Polypropylen (H-PP2), und ein Polyethylen hoher Dichte (HDPE) enthält, wobei die Polymer-Zusammensetzung
(a) wenigstens 25 Gew.-% des heterophasischen Polypropylens (H-PP1),
(b) wenigstens 25 Gew.-% des heterophasischen Polypropylens (H-PP2),
(c) wenigstens 3 Gew.-% des Polyethylens hoher Dichte (HDPE),
(d) 10.000 bis 550.000 ppm Inosilikat,
(e) 100 bis 5.000 ppm phenolische Antioxidantien und
(f) wahlweise 100 bis 5.000 ppm Phosphor-Antioxidantien,
basierend auf der Polymer-Zusammensetzung, enthält,
und wobei ferner
(g) das heterophasische Polypropylen (H-PP1)
(g1) eine Polypropylen-Matrix, die ein Propylen-Homopolymer ist, und ein elastomeres Copolymer enthält, wobei das elastomere Copolymer Einheiten von
• Propylen und
• Ethylen und/oder C4- bis C20-α-Olefin
enthält,
(g2) einen Comonomergehalt von 8 bis 30 Gew.%, basierend auf dem heterophasischen Polypropylen (H-PP1), aufweist, wobei das Comonomer Ethylen und/oder wenigstens ein C4- bis C20-α-Olefin ist, und
(g3) einen gemäß ISO 6427 gemessenen Gehalt an Xylolkaltlöslichen Anteilen (XCS) von 15,0 bis 40,0 Gew.-%, basierend auf dem heterophasischen Polypropylen (H-PP1), aufweist,
(h) das heterophasische Polypropylen (H-PP2)
(h1) eine Polypropylen-Matrix, die ein Propylen-Homopolymer ist, und ein elastomeres Copolymer enthält, wobei das elastomere Copolymer Einheiten von
• Propylen und
• Ethylen und/oder C4- bis C20-α-Olefin
enthält,
(h2) einen Comonomergehalt von 1.0 bis 20.0 Gew.-%, basierend auf dem heterophasischen Polypropylen (H-PP2), aufweist, wobei das Comonomer Ethylen und/oder wenigstens ein C4-bis C20-α-Olefin ist, und
(h3) einen gemäß ISO 6427 gemessenen Gehalt an Xylolkaltlöslichen Anteilen (XCS) von 5,0 bis 30,0 Gew.-%, basierend auf dem heterophasischen Polypropylen (H-PP2), aufweist, und
(h4) wahlweise einen Schmelzindex MFR₂ (230 °C) im Bereich von 10,0 bis 40,0 g/10min besitzt,
und
(i) sich das heterophasische Polypropylen (H-PP2) vom heterophasischen Polypropylen (H-PP1) im Gehalt an Xylol-kaltlöslichen Anteilen (XCS) unterscheidet.

2. Kraftfahrzeug-Innengegenstand nach Anspruch 1, bei dem das Inosilikat ein Einzelketten-Inosilikat ist.

3. Kraftfahrzeug-Innengegenstand nach Anspruch 1 oder 2, bei dem das Inosilikat aus der Pyroxenoidgruppe ist.

4. Kraftfahrzeug-Innengegenstand nach einem der vorherigen Ansprüche, bei dem das Inosilikat Wollastenit (Ca₃[Si₃O₉]) ist.

5. Kraftfahrzeug-Innengegenstand nach einem der vorherigen Ansprüche, bei dem die Polymer-Zusammensetzung keinen Talk enthält.

6. Kraftfahrzeug-Innengegenstand nach einem der vorherigen Ansprüche, bei dem die Polymer-Zusammensetzung 5 bis 15 Gew.-% des Polyethylens hoher Dichte (HDPE) enthält, basierend auf der Polymer-Zusammensetzung.

7. Kraftfahrzeug-Innengegenstand nach einem der vorherigen Ansprüche, bei dem das phenolische Antioxidans ein sterisch gehindertes phenolisches Antioxidans ist bzw. die phenolischen Antioxidantien sterisch gehinderte phenolische Antioxidantien sind.

8. Kraftfahrzeug-Innengegenstand nach einem der vorherigen Ansprüche, bei dem das phenolische Antioxidans bzw. die phenolischen Antioxidantien wenigstens einen Rest der Formel (II) 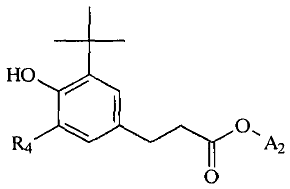 enthält bzw. enthalten, wobei
R₄ (CH₃)₃C-, CH₃- oder H, vorzugsweise (CH₃)₃C-, ist und
A₂ den restlichen Teil des phenolische Antioxidans bzw. der phenolischen Antioxidantien bildet.

9. Kraftfahrzeug-Innengegenstand nach einem der vorherigen Ansprüche, bei dem die Polymer-Zusammensetzung zusätzlich enthält:
(a) 1000 bis 2500 ppm eines gehinderten Amin-Lichtstabilisators bzw. von gehinderten Amin-Lichtstabilisatoren und/oder
(b) 1000 bis 2000 ppm eines Gleitmittels (C), das ein Fettsäureamid ist, bzw. von Gleitmitteln (C), die Fettsäureamide sind.

10. Kraftfahrzeug-Innengegenstand nach einem der vorherigen Ansprüche, bei dem die Polymer-Zusammensetzung zusätzlich enthält:
(a) 100 bis 5.00 ppm Polyether mit einem gewichtsgemittelten Molekulargewicht (M_{w}) von mehr als 300 g/mol und/oder
(b) 100 bis 8.000 ppm Carbonylverbindungen, ausgewählt aus der Gruppe, die aus Carbonsäure, Carbonsäureamid und Carbonsäureester besteht.

11. Kraftfahrzeug-Innengegenstand nach einem der vorherigen Ansprüche, bei dem der Gegenstand eine gemäß VDA 277 gemessene Gasraumemission
(a) aller flüchtigen Bestandteile der Polymer-Zusammensetzung zusammen von gleich oder unter 120 µgC/g und/oder
(b) von 2-Methyl-1-propen aus der Polymer-Zusammensetzung von nicht mehr als 70 µgC/g
aufweist.

12. Verwendung eines Inosilikats in einem Kraftfahrzeug-Innengegenstand nach einem der vorhergehenden Ansprüche, um einen gemäß VDA 270 gemessenen Geruch-Sinneseindruck von unter 4,0 zu erreichen.

## Revendications

1. Article pour intérieur d'automobile comprenant au moins 50 % en poids, par rapport audit article, d'une composition de polypropylène présentant un indice de fluage MFR₂ (230°C), mesuré conformément à la norme ISO 1133, de 2,0 à 80,0 g/10 min, ladite composition de polypropylène comprenant, à titre de composants polymères, uniquement un polypropylène hétérophasique (H-PP1), un polypropylène hétérophasique (H-PP2), et un polyéthylène haute densité (HDPE),
dans lequel ladite composition de polypropylène comprend
(a) au moins 25 % en poids du polypropylène hétérophasique (H-PP1),
(b) au moins 25 % en poids du polypropylène hétérophasique (H-PP2),
(c) au moins 3 % en poids du polyéthylène haute densité (HDPE),
(d) 10 000 à 550 000 ppm d'inosilicate,
(e) 100 à 5 000 ppm d'antioxydants phénoliques, et
(f) éventuellement 100 à 5 000 ppm d'antioxydants phosphoreux,
par rapport à la composition de polymère,
et en outre dans lequel
(g) ledit polypropylène hétérophasique (H-PP1)
(g1) comprend une matrice de polypropylène qui est un homopolymère de propylène et un copolymère élastomère, ledit copolymère élastomère comprenant des motifs dérivés
• de propylène et
• d'éthylène et/ou d'α-oléfine en C₄ à C₂₀,
(g2) présente une teneur en comonomère de 8 à 30 % en poids par rapport audit polypropylène hétérophasique (H-PP1), ledit comonomère étant l'éthylène et/ou au moins une α-oléfine en C₄ à C₂₀, et
(g3) présente une teneur en composés solubles dans le xylène froid (XCS), mesurée conformément à la norme ISO 6427, de 15,0 à 40,0 % en poids par rapport au polypropylène hétérophasique (H-PP1),
(h) ledit polypropylène hétérophasique (H-PP2)
(h1) comprend une matrice de polypropylène qui est un homopolymère de propylène et un copolymère élastomère, ledit copolymère élastomère comprenant des motifs dérivés
• de propylène et
• d'éthylène et/ou d'α-oléfine en C₄ à C₂₀,
(h2) présente une teneur en comonomère de 1,0 à 20,0 % en poids par rapport audit polypropylène hétérophasique (H-PP2), ledit comonomère étant l'éthylène et/ou au moins une α-oléfine en C₄ à C₂₀, et
(h3) présente une teneur en composés solubles dans le xylène froid (XCS), mesurée conformément à la norme ISO 6427, de 5,0 à 30,0 % en poids par rapport au polypropylène hétérophasique (H-PP2), et
(h4) éventuellement présente un indice de fluage MFR₂ (230°C) situé dans la plage allant de 10,0 à 40,0 g/10 min,
et
(i) ledit polypropylène hétérophasique (H-PP2) présente une teneur en composés solubles dans le xylène froid (XCS) différente de celle du polypropylène hétérophasique (H-PP1).

2. Article pour intérieur d'automobile selon la revendication 1, dans lequel l'inosilicate est un inosilicate à une seule chaîne.

3. Article pour intérieur d'automobile selon la revendication 1 ou 2, dans lequel l'inosilicate appartient au groupe des pyroxénoïdes.

4. Article pour intérieur d'automobile selon l'une quelconque des revendications précédentes, dans lequel l'inosilicate est la Wollastonite (Ca₃[Si₃O₉]).

5. Article pour intérieur d'automobile selon l'une quelconque des revendications précédentes, lequel article ne comprend pas de talc.

6. Article pour intérieur d'automobile selon l'une quelconque des revendications précédentes, dans lequel la composition de polypropylène comprend 5 à 15 % en poids du polyéthylène haute densité (HDPE) par rapport à la composition de polypropylène.

7. Article pour intérieur d'automobile selon l'une quelconque des revendications précédentes, dans lequel le ou les antioxydants phénoliques sont un ou plusieurs antioxydant(s) phénolique(s) à encombrement stérique.

8. Article pour intérieur d'automobile selon l'une quelconque des revendications précédentes, dans lequel le ou les antioxydants phénoliques comprend/comprennent au moins un résidu de formule (II) 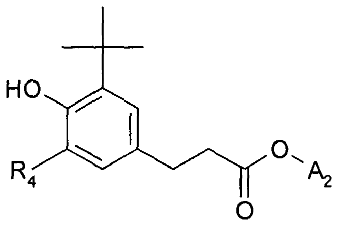 dans laquelle
R₄ est (CH₃)₃C-, CH₃- ou H, de préférence (CH₃)₃C-, et
A₂ constitue la partie restante du ou des antioxydant(s) phénolique(s).

9. Article pour intérieur d'automobile selon l'une quelconque des revendications précédentes, dans lequel la composition de polypropylène comprend de plus
(a) 1 000 à 2 500 ppm d'un ou plusieurs stabilisant(s) à la lumière de type amine encombrée, et/ou
(b) 1 000 à 2 000 ppm d'un ou plusieurs agent (s) de glissement (C) qui est/sont un ou plusieurs amide(s) d'acide gras.

10. Article pour intérieur d'automobile selon l'une quelconque des revendications précédentes, dans lequel la composition de polypropylène comprend de plus
(a) 100 à 5 000 ppm de polyéthers présentant une masse moléculaire moyenne en masse (M_{w}) supérieure à 300 g/mol, et/ou
(b) 100 à 8 000 ppm de composés carbonyle choisis dans l'ensemble constitué par un acide carboxylique, un amide d'acide carboxylique et un ester d'acide carboxylique.

11. Article pour intérieur d'automobile selon l'une quelconque des revendications précédentes, lequel article présente une émission d'espace de tête, mesurée conformément à la norme VDA 277,
(a) de tous les composés volatils ensemble de ladite composition de polymère, égale ou inférieure à 120 µgC/g, et/ou
(b) du 2-méthyl-1-propène de ladite composition de polymère, d'au plus 70 µgC/g.

12. Utilisation d'un inosilicate dans un article pour intérieur d'automobile selon l'une quelconque des revendications précédentes, pour réaliser une impression sensorielle d'odeur, mesurée conformément à la norme VDA 270, inférieure à 4,0.
